# EUROPEAN PATENT SPECIFICATION

(11) **EP 4 411 955 B1**
(45) Date of publication and mention of the grant of the patent: **22.04.2026**
(21) Application number: 22921407.7
(22) Date of filing: 24.06.2022
(51) Int. Cl.: H01M 50/30, H01M 50/474

(54) **BATTERY CELL, BATTERY AND ELECTRICITY CONSUMING DEVICE**
BATTERIEZELLE, BATTERIE UND ELEKTRIZITÄT VERBRAUCHENDE VORRICHTUNG
ÉLÉMENT DE BATTERIE, BATTERIE ET DISPOSITIF CONSOMMATEUR D'ÉLECTRICITÉ

(30) Priority: 24.01.2022 CN 202220191516 U
(43) Date of publication of application: 07.08.2024
(73) Proprietor: Contemporary Amperex Technology (Hong Kong) Limited, Central, Central And Western District (HK)
(72) Inventor: LEI, Yuyong, Ningde, Fujian 352100 (CN); GUO, Zhijun, Ningde, Fujian 352100 (CN); WANG, Peng, Ningde, Fujian 352100 (CN)
(74) Representative: Gong, Jinping
(86) International application number: PCT/CN2022/101110
(87) International publication number: WO 2023/137976

(56) References cited:
- WO-A1-2018/131417
- CN-A- 102 544 411
- CN-A- 107 394 063
- CN-A- 111 933 833
- CN-A- 112 018 321
- CN-A- 112 018 462
- CN-A- 113 383 457
- CN-U- 207 474 504
- CN-U- 216 720 178
- JP-A- 2009 004 271
- JP-A- 2011 204 469
- JP-A- 2016 095 930

## Description

### CROSS REFERENCE TO RELATED APPLICATIONS

The present application claims priority of the Chinese patent application 202220191516.9, titled "BATTERY CELL, BATTERY AND ELECTRICITY CONSUMING DEVICE" and filed on January 24, 2022.

### TECHNICAL FIELD

The present application relates to the technical field of batteries, and particularly to a battery cell as specified in any of claims 1-12, a battery as specified in claim 13, and an electricity consuming device as specified in claim 14.

### BACKGROUND

Battery cells are widely used in electronic devices, such as mobile phones, laptops, battery cars, electric cars, electric planes, electric ships, electric toy cars, electric toy ships, electric toy planes and electric tools. CN207474504U mentions that a battery includes a battery cover and a battery case.

How to improve safety of the battery cells in use is an important studying direction in the battery technology.

### SUMMARY

The present invention is defined by the appended claims. The present application provides a battery cell, a battery and an electricity consuming device that can improve safety.

In a first aspect, the embodiments of the present application provides a battery cell, including a shell, a pressure relief mechanism, an electrode assembly and an insulating member. The pressure relief mechanism is disposed on the shell. The electrode assembly is accommodated within the shell. The insulating member is accommodated within the shell, at least a portion of the insulating member is located between the pressure relief mechanism and the electrode assembly, and a portion of the insulating member located between the pressure relief mechanism and the electrode assembly is provided with a first weak portion; wherein the insulating member includes a first insulating plate, the first insulating plate includes a first insulating portion, a second insulating portion and a plurality of first weak portions, and the plurality of the first weak portions are connected between the first insulating portion and the second insulating portion. The first insulating plate is provided with a plurality of second through holes, and the plurality of second through holes and the plurality of first weak portions are alternately arranged in a peripheral direction of the second insulating portion on an outer side of the second insulating portion.

In the above technical solution, the insulating member can insulate and isolate the pressure relief mechanism from the electrode assembly, to reduce risk of the pressure relief mechanism conducting positive and negative electrodes of the electrode assembly, and improve safety. When thermal runaway of the electrode assembly occurs and high-temperature and high-pressure substances are released, the first weak portion of the insulating member ruptures under the impact of the high-temperature and high-pressure substances, forming a channel for the high-temperature and high-pressure substances to pass through on the insulating member; after passing through the insulating member, the high-temperature and high-pressure substances act on the pressure relief mechanism, then actuate the pressure relief mechanism, and are discharged to an outside of the battery cell through the pressure relief mechanism. By providing the first weak portion on the insulating member, obstruction of the insulating member to the high-temperature and high-pressure substances can be reduced, allowing pressure of the battery cell to be released in a timely manner and improving safety.

In some implementations, the pressure relief mechanism includes a second weak portion. By providing the second weak portion on the pressure relief mechanism, the pressure relief mechanism can rupture along the second weak portion when thermal runaway occurs in the battery cell and form a pressure relief channel, thereby timely releasing the pressure and improving safety.

In some implementations, the shell is provided with a pressure relief hole, and the pressure relief mechanism is installed on the shell and covers the pressure relief hole. Under normal conditions, the pressure relief mechanism covers the pressure relief hole to isolate spaces on inner and outer sides of the shell. When thermal runaway occurs in the battery cell, the pressure relief mechanism ruptures along the second weak portion to open the pressure relief hole, allowing the high-temperature and high-pressure substances to be discharged through the pressure relief hole.

In some implementations, the first weak portion at least partially overlaps with the pressure relief hole in a thickness direction of the pressure relief mechanism. When thermal runaway occurs in the battery cell, the pressure relief mechanism opens the pressure relief hole, the opened pressure relief hole is opposite to a rupture site of the first weak portion, and the high-temperature and high-pressure substances passing through the rupture site of the first weak portion can be quickly discharged through the pressure relief hole, thereby improving discharge efficiency of the high-temperature and high-pressure substances.

In some implementations, the insulating member includes a first insulating plate, which includes a first insulating portion, a second insulating portion and the first weak portion, and the first weak portion connects the first insulating portion and the second insulating portion; in the thickness direction of the pressure relief mechanism, a projection of the second insulating portion is located within a projection of the pressure relief hole.

When thermal runaway occurs in the battery cell, a pressure relief channel formed by the first insulating plate at a region corresponding to the second insulating portion is opposite to the pressure relief hole, so that the high-temperature and high-pressure substances released by the electrode assembly can be quickly discharged, thereby improving safety. The second insulating portion can be discharged to an outside of the shell through the pressure relief hole, thereby reducing risk of the second insulating portion obstructing the high-temperature and high-pressure substances.

In some implementations, the first insulating portion is disposed surrounding the second insulating portion on an outer side of the second insulating portion, and the first weak portion is located between the first insulating portion and the second insulating portion. When thermal runaway occurs in the battery cell, the first weak portion ruptures, and the second insulating portion detaches from the first insulating portion to be discharged to the outside of the shell through the pressure relief hole.

In some implementations, the second insulating portion has a size smaller than that of the pressure relief hole in any direction perpendicular to the thickness direction. When thermal runaway occurs in the battery cell, the second insulating portion is not easily obstructed by the pressure relief mechanism and can be quickly discharged to the outside of the shell through the pressure relief hole, thereby reducing influence of the second insulating portion on a discharging rate.

In some implementations, in the thickness direction, a projection of the first weak portion is located within the projection of the pressure relief hole. When thermal runaway occurs in the battery cell, the rupture site of the first weak portion is opposite to the pressure relief hole, and the high-temperature and high-pressure substances passing through the rupture site of the first weak portion can be quickly discharged through the pressure relief hole, thereby improving the discharge efficiency of the high-temperature and high-pressure substances.

In some implementations, the shell includes a first wall, the pressure relief hole is disposed on the first wall, the pressure relief mechanism is connected with the first wall, and at least a portion of the first insulating portion insulates and isolates the first wall from the electrode assembly. The first insulating portion can insulate and isolate the first wall from the electrode assembly, thereby reducing risk of the first wall conducting the positive and negative electrodes of the electrode assembly and improving safety.

In some implementations, the battery cell further includes a support plate, and the support plate is disposed between the first wall and the electrode assembly. The support plate and the first insulating plate are arranged along the thickness direction. The support plate can support the electrode assembly to increase a distance between the pressure relief mechanism and the electrode assembly, thereby reducing risk of the pressure relief mechanism being damaged when the electrode assembly shakes.

In some implementations, the support plate is fixed to the first insulating portion, and a shaking amplitude of the support plate inside the shell can be reduced, thereby reducing risk of friction between the support plate and the first insulating plate.

In some implementations, the support plate is located between the first wall and the first insulating plate. The support plate includes a first support portion, a second support portion and a third weak portion, and the third weak portion connects the first support portion and the second support portion. In the thickness direction, a projection of the second support portion is located within the projection of the pressure relief hole.

When thermal runaway occurs in the battery cell, a pressure relief channel formed by the support plate at a region corresponding to the second support portion is opposite to the pressure relief hole, so that the high-temperature and high-pressure substances released by the electrode assembly can be quickly discharged, thereby improving safety. The second support portion can be discharged to the outside of the shell through the pressure relief hole, thereby reducing risk of the second support portion obstructing the high-temperature and high-pressure substances.

In some implementations, the second support portion has a size smaller than that of the pressure relief hole in any direction perpendicular to the thickness direction. When thermal runaway occurs in the battery cell, the second support portion is not easily obstructed by the pressure relief mechanism and can be quickly discharged to the outside of the shell through the pressure relief hole, thereby reducing influence of the second support portion on the discharging rate.

In some implementations, the projection of the second insulating portion is located within the projection of the second support portion.

When thermal runaway occurs in the battery cell, the pressure relief channel formed by the first insulating plate at the region corresponding to the second insulating portion, the pressure relief channel formed by the support plate at the region corresponding to the second support portion, and the pressure relief hole are opposite each other, and the high-temperature and high-pressure substances released by the electrode assembly can be quickly discharged, thereby improving safety. The second insulating portion can be discharged to the outside of the shell through the pressure relief channel of the support plate and the pressure relief hole, thereby reducing the risk of the second insulating portion obstructing the high-temperature and high-pressure substances.

In some implementations, the size of the second insulating portion is smaller than that of the second support portion in any direction perpendicular to the thickness direction. When thermal runaway occurs in the battery cell, the second insulating portion is not easily obstructed by the pressure relief mechanism and the support plate, and it can be quickly discharged to the outside of the shell through the pressure relief channel of the support plate and the pressure relief hole, thereby reducing the influence of the second insulating portion on the discharging rate.

In some implementations, the support plate is located between the electrode assembly and the first insulating plate. The support plate includes a first support portion, a second support portion and a third weak portion, and the third weak portion connects the first support portion and the second support portion. In the thickness direction, a projection of the second support portion is located within the projection of the second insulating portion.

When thermal runaway occurs in the battery cell, the pressure relief channel formed by the support plate at the region corresponding to the second support portion is opposite to the pressure relief channel formed by the first insulating plate at the region corresponding to the second insulating portion, so that the high-temperature and high-pressure substances released by the electrode assembly can be quickly discharged, thereby improving safety. The second support portion can be discharged to the outside of the shell through the pressure relief channel of the first insulating plate and the pressure relief hole, thereby reducing the risk of the second support portion obstructing the high-temperature and high-pressure substances.

In some implementations, the size of the second support portion is smaller than that of the second insulating portion in any direction perpendicular to the thickness direction. When thermal runaway occurs in the battery cell, the second support portion is not easily obstructed by the first insulating plate, and can be quickly discharged to the outside of the shell through the pressure relief channel of the first insulating plate, thereby reducing the influence of the second support portion on the discharging rate.

In some implementations, the third weak portion and the first weak portion do not overlap in the thickness direction, so as to reduce risk of both the first insulating plate and the support plate being punctured by metal particles and improve safety.

In some implementations, the support plate is located between the first wall and the first insulating plate. The support plate is provided with a first through hole. At least a portion of the first through hole is located between the second insulating portion and the pressure relief hole in the thickness direction.

By providing the first through hole on the support plate to reduce the obstruction of the support plate to the high-temperature and high-pressure substances, the first through hole can communicate the pressure relief channel of the first insulating plate with the pressure relief hole, thereby timely releasing the pressure and improving safety of the battery cell.

In some implementations, in the thickness direction, in the thickness direction, the projection of the second insulating portion is located within a projection of the first through hole. The second insulating portion can be discharged to the outside of the shell through the first through hole and the pressure relief hole, thereby reducing the risk of the second insulating portion obstructing the high-temperature and high-pressure substances and improving the discharge efficiency.

In some implementations, the support plate is located between the electrode assembly and the first insulating plate. The support plate is provided with a first through hole. In the thickness direction, the projection of the second insulating portion at least partially overlaps with a projection of the first through hole. By providing the first through hole to reduce the obstruction of the support plate to the high-temperature and high-pressure substances, the high-temperature and high-pressure substances can be quickly discharged through the first through hole, the pressure relief channel of the first insulating plate and the pressure relief hole, thereby timely releasing an internal pressure of the battery cell and improving the safety of the battery cell.

In some implementations, the first insulating plate is provided with a first positioning hole, the support plate is provided with a second positioning hole, and the first positioning hole and the second positioning hole at least partially overlap with each other in the thickness direction. When assembling the insulating member with the support plate, the positioning of the insulating member and the support plate can be achieved through coordination of the first and second positioning holes, thereby reducing risk of misalignment and improving assembly efficiency.

In some implementations, the insulating member includes a first insulating plate, the first insulating plate is provided with a recess portion on its surface, and a bottom wall of the recess portion forms the first weak portion. By providing the recess portion on the first insulating plate, thickness and strength of a local region of the first insulating plate can be reduced, so that the first insulating plate can rupture at a predetermined region.

In some implementations, a ratio of a depth of the recess portion to a thickness of the first insulating plate is greater than or equal to 0.3, so that the first weak portion can rupture in a timely manner, thereby releasing the internal pressure of the battery cell in a timely manner and improving safety.

In some implementations, the recess portion is formed in an annular shape. By providing the annular recess portion on the first insulating plate, an annular first weak portion can be formed on the first insulating plate; when the annular first weak portion ruptures, the second insulating portion can completely break away from the first insulating portion, and can be discharged to the outside of the battery cell through the pressure relief hole.

By providing the plurality of second through holes on the first insulating plate, strength of the plurality of first weak portions is reduced, so that the first insulating plate can rupture at the predetermined region.

In some implementations, the shell includes a shell body and a cap plate, the shell body includes an opening, and the cap plate is adapted to cover and close the opening. The pressure relief mechanism is disposed on the shell body or the cap plate.

In some implementations, the pressure relief mechanism is disposed on the shell body, the insulating member includes a receiving chamber, and at least a portion of the electrode assembly is accommodated in the receiving chamber. The insulating member insulates and isolates at least a portion of the electrode assembly from the shell body, so as to reduce the risk of the shell conducting the positive and negative electrodes of the electrode assembly and improve safety.

In some implementations, the shell body includes a first wall, a second wall and two third walls, the first wall and the second wall are disposed opposite each other in a first direction, the two third walls are disposed opposite each other in a second direction, each of the third walls connects the first wall and the second wall. The pressure relief mechanism is disposed on the first wall. The first direction intersects with the second direction.

In some implementations, the first wall has an area smaller than that of each of the third walls.

The electrode assembly may expand during charging; compared to the first wall, the third walls have larger areas, are also subjected to larger expansion forces applied by the electrode assembly, and thus are more easily deformed. By disposing the pressure relief mechanism on the first wall with a smaller area, deformation of the pressure relief mechanism can be reduced, aging of the pressure relief mechanism can be slowed down, and a service life of the pressure relief mechanism can be extended.

In some implementations, the insulating member includes a first insulating plate, two second insulating plates and two third insulating plates, the first insulating plate is disposed between the electrode assembly and the first wall, the two third insulating plates are connected to two ends of the first insulating plate in the second direction respectively, and the third insulating plates are each located between the electrode assembly and the corresponding third walls. The two second insulating plates are respectively connected to the two third insulating plates and are located between the electrode assembly and the second wall. The insulating member can wrap the electrode assembly around it to reduce the risk of metal particles conducting the electrode assembly with the shell, and thus improve safety.

In some implementations, the two second insulating plates at least partially overlap with each other in the first direction, and portions of the two second insulating plates overlapping with each other in the first direction are connected to each other. By connecting the two second insulating plates, risk of opening of the insulating member when the battery cell is subjected to external impacts can be reduced, thereby ensuring insulation between the electrode assembly and the shell.

In some implementations, the shell body includes openings at both ends in the third direction, two cap plates are provided, and the two cap plates are adapted to cover and close the two openings respectively.

In some implementations, the shell includes a first wall, and the pressure relief mechanism is installed on the first wall. The first wall includes an inner surface facing the electrode assembly and an outer surface facing away from the electrode assembly, and the inner surface is closer to the electrode assembly than the pressure relief mechanism. The pressure relief mechanism is spaced apart from the inner surface at a certain distance so as to reduce risk of components inside the shell squeezing the pressure relief mechanism, slow down the aging of the pressure relief mechanism, and improve safety.

The pressure relief mechanism includes a pressure relief portion and a second weak portion disposed surrounding the pressure relief portion on an outer side of the pressure relief portion. The insulating member includes a first insulating plate, the first insulating plate includes a first insulating portion, a second insulating portion and the first weak portion, and the first weak portion connects the first insulating portion and the second insulating portion. In the thickness direction of the pressure relief mechanism, a projection of the second insulating portion is located within a projection of the pressure relief portion.

The shell includes a first wall, and the pressure relief mechanism is disposed on the first wall. The battery cell further includes a support plate, the support plate is located between the first wall and the first insulating plate; the support plate includes a first support portion, a second support portion and a third weak portion, and the third weak portion connects the first support portion and the second support portion. In the thickness direction, a projection of the second support portion is located within the projection of the pressure relief portion.

In a second aspect, the embodiments of the present application provide a battery cell, which includes a shell, a pressure relief mechanism, an electrode assembly and an insulating member. The pressure relief mechanism is disposed on the shell. The electrode assembly is accommodated within the shell. The insulating member is accommodated within the shell and adapted to insulate and isolate at least a portion of the electrode assembly from the shell. The insulating member is provided with a third through hole, and at least a portion of the third through hole is located between the pressure relief mechanism and the electrode assembly.

When thermal runaway of the electrode assembly occurs and high-temperature and high-pressure substances are released, the high-temperature and high-pressure substances act on the pressure relief mechanism after passing through the third through hole, then actuates the pressure relief mechanism, and are discharged to the outside of the battery cell through the pressure relief mechanism. The embodiments of the present application reduce the obstruction to the high-temperature and high-pressure substances by opening the third through hole on the insulating member, enabling the pressure of the battery cell to be released timely and improving safety.

In some implementations, the battery cell further includes a support plate, and at least a portion of the support plate is disposed between the pressure relief mechanism and the insulating member and covers the third through hole. A portion of the support plate located between the pressure relief mechanism and the third through hole is provided with a third weak portion.

The support plate covers the third through hole to insulate and isolate the electrode assembly from the pressure relief mechanism, thereby reducing the risk of the electrode assembly squeezing the pressure relief mechanism through the third through hole. When thermal runaway of the electrode assembly occurs and the high-temperature and high-pressure substances are released, the high-temperature and high-pressure substances act on the third weak portion, and the third weak portion of the support plate ruptures under the impact of the high-temperature and high-pressure substances, forming a channel for high-temperature and high-pressure substances to pass through on the support plate; the high-temperature and high-pressure substances act on the pressure relief mechanism after passing through the support plate, so that the pressure relief mechanism is then actuated to open the pressure relief hole, and the high-temperature and high-pressure substances are discharged to the outside of the battery cell. By providing the third weak portion on the support plate, the obstruction of the support plate to the high-temperature and high-pressure substances can be reduced, allowing the pressure of the battery cell to be released in a timely manner and improving safety.

In some implementations, the battery cell further includes a support plate, and at least a portion of the support plate is disposed between the electrode assembly and the insulating member and covers the third through hole. A portion of the support plate located between the electrode assembly and the third through hole is provided with a third weak portion.

The support plate covers the third through hole to insulate and isolate the electrode assembly from the pressure relief mechanism, thereby reducing the risk of the electrode assembly squeezing the pressure relief mechanism through the third through hole. When thermal runaway of the electrode assembly occurs and the high-temperature and high-pressure substances are released, the high-temperature and high-pressure substances act on the third weak portion, and the third weak portion of the support plate ruptures under the impact of the high-temperature and high-pressure substances, forming a channel for the high-temperature and high-pressure substances to pass through on the support plate; after passing through the support plate, the high-temperature and high-pressure substances act on the pressure relief mechanism through the third through hole, then activate the pressure relief mechanism to open the pressure relief hole, and further are discharged to the outside of the battery cell. By providing the third weak portion on the support plate, the obstruction of the support plate to the high-temperature and high-pressure substances can be reduced, allowing the pressure of the battery cell to be released in a timely manner and improving safety.

In a third aspect, the embodiments of the application provide a battery, including a plurality of battery cells according to any of embodiments in the first aspect or a plurality of battery cells according to any of the embodiments in the second aspect.

In a fourth aspect, the present embodiment provides an electricity consuming device, including a battery cell according to any of the embodiments in the first aspect or a battery cell according to any of the embodiments in the second aspect, and the battery cell is adapted to provide electrical energy.

### BRIEF DESCRIPTION OF THE DRAWINGS

In order to describe the technical solution of the embodiments of the present application more clearly, a brief introduction will be given to the accompanying drawings required in the embodiments of the present application; obviously, the accompanying drawings described below are only some embodiments of the present application, and for ordinary skilled person in the art, other accompanying drawings can be obtained based on the accompanying drawings without any creative effort.
Fig. 1 is a structural schematic diagram of a vehicle provided in some embodiments of the present application;
Fig. 2 is an explosive schematic diagram of a battery provided in some embodiments of the present application;
Fig. 3 is an explosive schematic diagram of a battery cell provided in some embodiments of the present application;
Fig. 4 is a schematic diagram of a battery cell in a front view provided in some embodiments of the present application;
Fig. 5 is a schematic cutaway view along line A-A in Fig. 4;
Fig. 6 is an enlarged schematic diagram of square frame B in Fig. 5;
Fig. 7 is an enlarged schematic diagram of circle frame C in Fig. 6;
Fig. 8 is a schematic cutaway view of a first wall shown in Fig. 6;
Fig. 9 is a structural schematic diagram of an insulating plate shown in Fig. 3;
Fig. 10 is a structural schematic diagram of a support plate shown in Fig. 3;
Fig. 11 is a schematic partial cutaway view of a battery cell provided in some other embodiments of the present application;
Fig. 12 is a schematic partial cutaway view of a battery cell provided in some other embodiments of the present application;
Fig. 13 is a schematic partial cutaway view of a battery cell provided in some other embodiments of the present application;
Fig. 14 is a partial schematic diagram of an insulating member of a battery cell provided in some embodiments of the present application;
Fig. 15 is a schematic local cross-sectional view along line D-D in Fig. 14;
Fig. 16 is a schematic partial cutaway view of a battery cell provided in some other embodiments of the present application;
Fig. 17 is a schematic partial cutaway view of a battery cell provided in some other embodiments of the present application;
Fig. 18 is an enlarged schematic diagram of square frame E in Fig. 17;
Fig. 19 is an enlarged schematic diagram of circle frame F in Fig. 18; and
Fig. 20 is a schematic partial cutaway view of a battery cell provided in some other embodiments of the present application.

Reference numerals in the accompanying drawings of specific embodiments are as below.
1, vehicle; 2, battery; 3, controller; 4, motor; 5, housing; 6, battery cell; 5a, the first housing portion; 5b, second housing portion; 5c, receiving space; 10, electrode assembly; 20, shell; 21, shell body; 211, first wall; 211a, inner surface; 211b, outer surface; 212, second wall; 213, third wall; 21a, opening; 22, cap plate; 20a, pressure relief hole; 20b, shell recess; 20c, bottom surface; 30, pressure relief mechanism; 31, pressure relief portion; 32, second weak portion; 33, connecting portion; 40, insulating member; 41, first insulating plate; 411, first weak portion; 412, first insulating portion; 413, second insulating portion; 414, first positioning hole; 415, second through hole; 416, recess portion; 417, third through hole; 42, second insulating plate; 43, third insulating plate; 40a, receiving chamber; 50, electrode terminal; 60, support plate; 61, first support portion; 62, second support portion; 63, third weak portion; 64, second positioning hole; 65, fourth through hole; 66, first through hole; 70, protective sheet; X, thickness direction; Y, second direction; and Z, third direction.

### DETAILED DESCRIPTION

In order to make the purpose, technical solutions and advantages of the embodiments of the present application clearer, the technical solutions in the embodiments of the present application will be clearly described below in combination with the accompanying drawings in the embodiments of the present application. Obviously, the described embodiments are a part of the embodiments of the present application, not all of them. Based on the embodiments in the present application, all other embodiments obtained by ordinary skilled person in the art without creative labor fall within the protection scope of the present application.

Unless otherwise defined, all technical and scientific terms used in the present application have the same meanings as those commonly understood by the person skilled in the art of the present application; the terms used in the specification of the present application are only intended to describe specific embodiments while not limit the present application; the terms "include" and "have" in the description, claims and the above description of accompanying drawings of the present application, and any variations thereof, are intended to cover non-exclusive inclusion. The terms "first", "second", etc. in the description, claims and the above description of accompanying drawings of the present application are used to distinguish different objects, rather than to describe specific sequences or primary and secondary relationships.

When referring to "embodiment" in the present application, it means that specific features, structures, or characteristics described in combination with said embodiment can be included in at least one embodiment of the present application. The phrase appearing in various positions in the description does not necessarily refer to the same embodiment, nor is it an independent or alternative embodiment that is mutually exclusive with other embodiments.

In the description of the present application, it should be noted that unless otherwise specified and limited, the terms "installation", "connection", "coupling", and "attachment" should be broadly understood, for example, they can be fixed connections, detachable connections, or integrated connections; they can be direct connections, or indirect connections through intermediate mediums, or can be internal connections between two components. For ordinary skilled person in the art, the specific meanings of the above terms in the present application can be understood according to specific circumstances.

In the present application, the term "and/or" is only a description of association relationship of associated objects, indicating that there can be three types of relationships, for example, C and/or D can indicate the presence of C alone, the presence of C and D simultaneously, and the presence of D alone. In addition, the character "/" in the present application generally indicates that the associated objects before and after the character are in an "or" relationship.

In the embodiments of the present application, the same reference numerals represent the same components, and for simplicity, detailed descriptions of the same components are omitted in different embodiments. It should be understood that the thickness, length, width, and other dimensions of various components as well as the overall thickness, length, width, and other dimensions of the integrated device in the embodiments of the present application shown in the accompanying drawings, are only illustrative examples and should not constitute any limitations in the present application.

The term "a plurality of" in the present application refers to two or more (including two).

In the present application, a battery cell may include a lithium ion secondary battery cell, a lithium ion primary battery cell, a lithium sulfur battery cell, a sodium-lithium ion battery cell, a sodium ion battery cell, a magnesium ion battery cell, or the like, and the embodiments of the present application do not limit this aspect. The battery cell can be in a shape of a cylinder, a flat body, a rectangular cuboid or in other shapes, and the embodiments of the present application do not limit this aspect.

The battery referred to in the embodiments of the present application refers to a single physical module that includes one or more battery cells to provide higher voltage and capacity. For example, the battery referred to in the present application may include battery modules, battery packs, or the like. The battery generally includes a casing for packaging one or more battery cells. The casing can prevent liquids or other foreign substances from affecting charging or discharging of the battery cells.

The battery cell includes an electrode assembly and electrolyte, and the electrode assembly includes a positive electrode plate, a negative electrode plate, and a separator. The battery cell operates mainly relying on movement of metal ions between the positive and negative electrode plates. The positive electrode plate includes a positive current collector and a positive active substance layer, the positive active substance layer is applied to a surface of the positive current collector; the positive current collector includes a positive coating area and a positive tab connected to the positive coating area, the positive coating area is coated with the positive active substance layer, and the positive tab is not coated with the positive active substance layer. Taking the lithium ion battery cell as an example, the positive current collector can be made of aluminum, and the positive active substance layer includes positive active substance, which may be lithium cobalt oxide, lithium iron phosphate, ternary lithium or lithium manganese oxide. The negative electrode plate includes a negative current collector and a negative active substance layer, the negative active substance layer is applied to a surface of the negative current collector; the negative current collector includes a negative coating area and a negative tab connected to the negative coating area, the negative coating area is coated with the negative active substance layer, and the negative tab is not coated with the negative active substance layer. The negative current collector can be made of copper, the negative active substance layer include negative active substance, and the negative active substance can be carbon or silicon. The separator can be made of polypropylene (PP) or polyethylene (PE), or the like.

The battery cell further includes a shell, and a receiving cavity is formed inside the shell to accommodate the electrode assembly. The shell can protect the electrode assembly from outside to prevent external foreign substances from affecting charging or discharging of the electrode assembly.

Various design factors need to be considered simultaneously for development of battery technologies, such as energy density, cycle life, discharge capacity, charge-discharge rate, and other performance parameters. Further, safety of the batteries also needs to be considered.

A pressure relief mechanism on the battery cell significantly affects the safety of the battery cell. For example, when phenomena such as short circuits and overcharging occur, thermal runaway inside the battery cell may be caused, resulting in a sudden increase in pressure. In this case, the internal pressure may be released outward by actuation of the pressure relief mechanism, to prevent explosion and fire of the battery cell.

The pressure relief mechanism refers to an element or a component that is activated to release an internal pressure when the internal pressure of a battery cell reaches a predetermined threshold. The designed threshold varies depending on different design requirements. The threshold may depend on materials of one or more of the positive electrode plate, the negative electrode plate, the electrolyte, and the separator of the battery cell.

The pressure relief mechanism may be in the form of an explosion-proof valve, a gas valve, a pressure relief valve, or a safety valve, and specifically may use a pressure sensitive element or structure, that is, when the internal pressure of the battery cell reaches a predetermined threshold, the pressure relief mechanism performs an action or a weak region provided in the pressure relief mechanism ruptures, forming an opening or a channel for release of the internal pressure. Alternatively, the pressure relief mechanism may use a temperature sensitive element or structure, that is, when an internal temperature of the battery cell reaches a predetermined threshold, the pressure relief mechanism performs an action, forming an opening or a channel for release of the internal pressure.

The term "actuation" mentioned in the present application refers to that the pressure relief mechanism acts or is activated to a certain state so that the internal pressure of the battery cell is allowed to be released. The action performed by the pressure relief mechanism may include but is not limited to: at least a portion of the pressure relief mechanism being ruptured, broken, torn or opened, etc. When the pressure relief mechanism is actuated, high-temperature and high-pressure substances inside the battery cell are discharged outwards through the actuated position as discharges. In this way, the pressure in the battery cell can be released at a controllable pressure, thereby avoiding potentially more serious accidents.

The discharges from the battery cell mentioned in the present application include but are not limited to: the electrolyte, dissolved or split positive and negative electrode plates, fragments of the separator, high-temperature and high-pressure gases generated by reaction, flame, etc.

In related technique, an insulating member is generally provided in the battery cell, which may insulate and isolate the pressure relief mechanism from the electrode assembly, so as to reduce risk of the pressure relief mechanism conducting the positive and negative electrodes of the electrode assembly, and improve the safety.

The inventors noticed that since the insulating member separates the pressure relief mechanism from the electrode assembly, when the battery cell experiences the thermal runaway, the high-temperature and high-pressure substances discharged by the electrode assembly will be obstructed by the insulating member, resulting in a low discharging rate of the high-temperature and high-pressure substances, thereby causing that the pressure of the battery cell cannot be released timely, and leading to a safety hazard.

In view of this, the embodiments of the present application provide a technical solution, which provides a weak structure on the insulating member so that the insulating member ruptures at the position of the weak structure when impacted by the high-temperature and high-pressure substances, forming a channel for discharging of the high-temperature and high-pressure substances, thereby weakening the obstruction of the insulating member to the high-temperature and high-pressure substances, allowing timely release of the pressure in the battery cell, and improving safety.

The battery cell described in the embodiments of the present application is applicable to a battery and an electricity consuming device using the battery.

The electricity consuming device may be a vehicle, a mobile phone, a portable device, a laptop, a ship, a spacecraft, an electric toy, an electric tool, and so on. The vehicle may be a fuel powered vehicle, a gas powered vehicle, or a new energy vehicle, and the new energy vehicle may be a pure electric vehicle, a hybrid electric vehicle, an extended range vehicle, or the like; the spacecraft includes an airplane, a rocket, a space shuttle, a space ship, and the like; the electric toy includes a stationary or mobile electric toy, such as a game machine, an electric car toy, an electric ship toy, an electric plane toy, and the like; the electric tool includes a metal cutting electric tool, a grinding electric tool, an assembling electric tool and a railway electric tool, such as an electric drill, an electric grinder, an electric wrench, an electric screwdriver, an electric hammer, an electric impact drill, a concrete vibrator and an electric planer. There are no particular limitations on the above-mentioned electricity consuming devices in the embodiments of the present application.

For the convenience of description, the following embodiments are described by taking the vehicle as an example of the electricity consuming device.

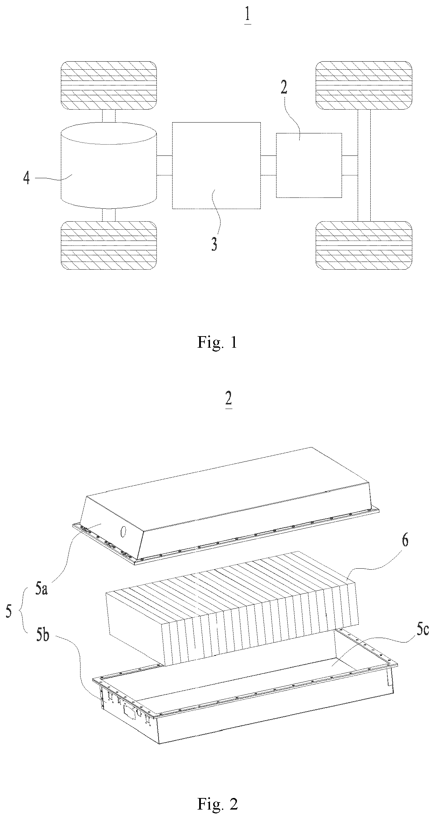

Fig. 1 is a structural schematic diagram of the vehicle provided in some embodiments of the present application.

As shown in Fig. 1, a vehicle 1 is provided with a battery 2 in its interior, and the battery 2 may be installed at a bottom, head, or rear of the vehicle 1. The battery 2 may be adapted for supplying electrical power to the vehicle 1, for example, the battery 2 may serve as an operating power supply of the vehicle 1.

The vehicle 1 may further include a controller 3 and a motor 4, and the controller 3 is adapted to control the battery 2 to supply the electrical power to the motor 4, for example, for satisfying working electrical power requirements of the vehicle 1 for starting, navigation, and travelling.

In some embodiments of the present application, the battery 2 can not only serve as the operating power source of the vehicle 1, but also as a driving power source for the vehicle 1, replacing or partially replacing fuel or natural gas to provide driving power for the vehicle 1.

Fig. 2 is an explosive schematic diagram of a battery provided in some embodiments of the present application.

As shown in Fig. 2, the battery 2 includes a housing 5 and a battery cell 6 (not shown), and the battery cell 6 is accommodated within the housing 5.

The housing 5 is adapted to accommodate the battery cells 6, and the housing 5 may be formed as various structures. In some embodiments, the housing 5 may include a first housing portion 5a and a second housing portion 5b, the first housing portion 5a and the second housing portion 5b cover and close each other, and the first housing portion 5a and the second housing portion 5b define a receiving space 5c for accommodating the battery cell 6 together. The second housing portion 5b may be formed as a hollow structure with an opening at one end, the first housing portion 5a is formed as a plate-like structure, and the first housing portion 5a covers and closes the opening side of the second housing portion 5b to form the receiving space 5c of the housing 5; it is also available that each of the first housing portion 5a and the second housing portion 5b is formed as a hollow structure with an opening on one side, the opening side of the first housing portion 5a covers and closes the opening side of the second housing portion 5b to form the receiving space 5c of the housing 5. Certainly, the first housing portion 5a and the second housing portion 5b may be formed in various shapes, such as cylinders, rectangles, etc.

In order to improve sealing performance between the first housing portion 5a and the second housing portion 5b after they are connected, a sealing element such as sealant, a sealing ring, may be installed between the first housing portion 5a and the second housing portion 5b.

Assuming that the first housing portion 5a covers and closes a top of the second housing portion 5b, the first housing portion 5a may also be referred to as an upper housing cover, and the second housing portion 5b may also be referred to as a lower housing body.

In the battery 2, there may be one battery cell 6, or a plurality of battery cells 6. When there are a plurality of battery cells 6, the plurality of battery cells 6 can be connected in series, in parallel, or in hybrid, where "in hybrid" means that the plurality of battery cells 6 are connected both in series and in parallel. The plurality of battery cells 6 can be directly connected in series, in parallel, or in hybrid, and then an integrity composed of the plurality of battery cells 6 is accommodated in the housing 5; certainly, it is also available that the plurality of battery cells 6 are connected in series, in parallel, or in hybrid to form battery modules at first, and then the plurality of battery modules are connected in series, in parallel, or in hybrid to form an integrity, which is accommodated in the housing 5.

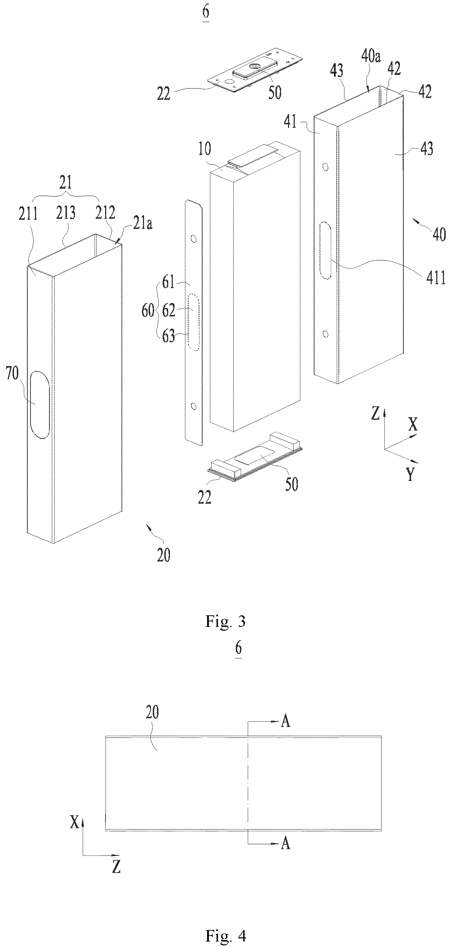

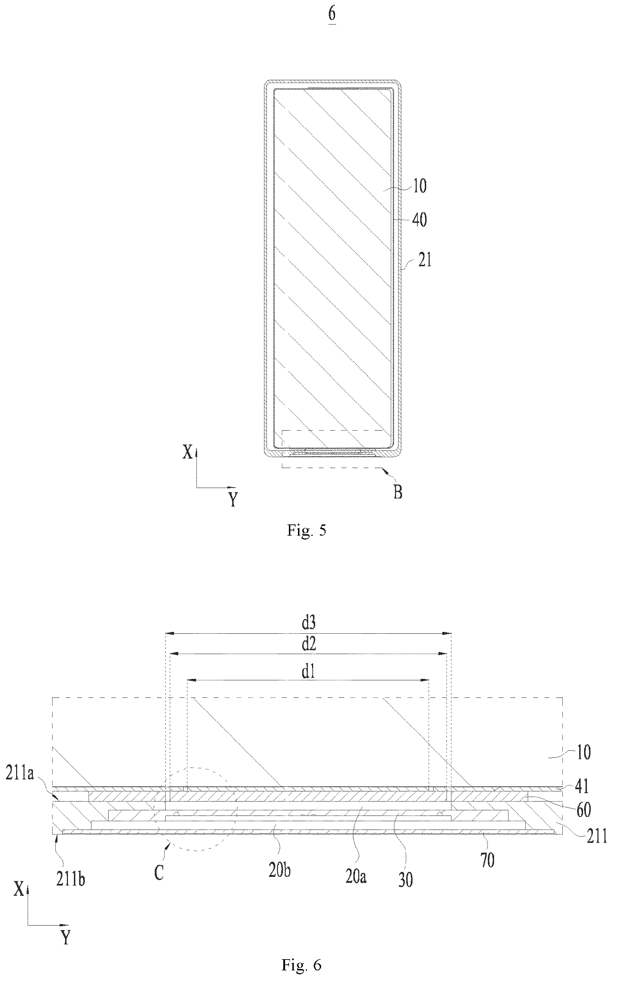

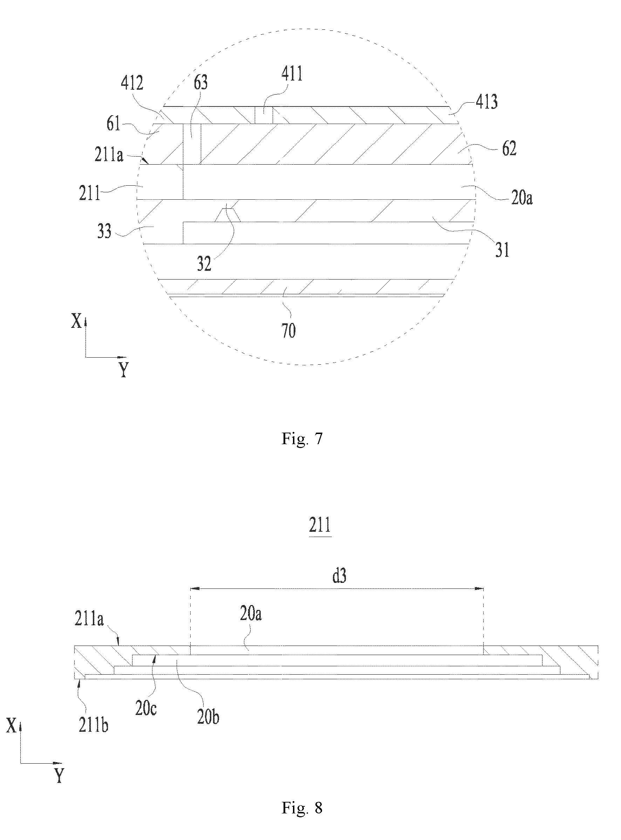

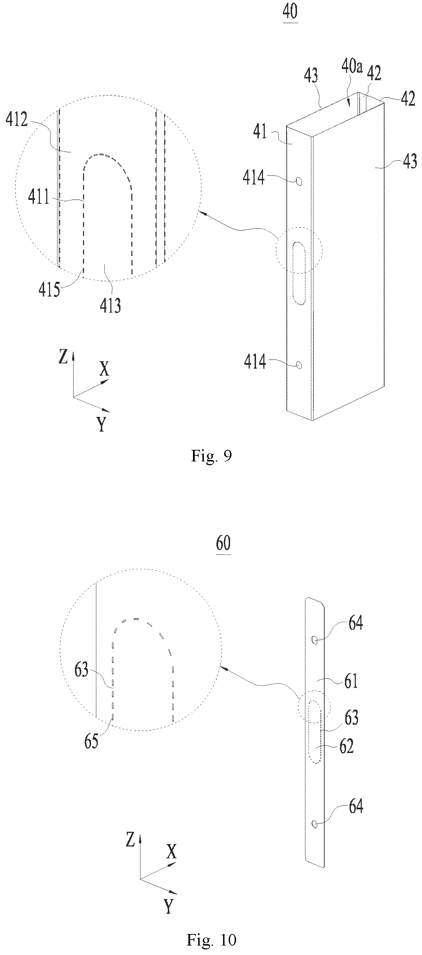

Fig. 3 is an explosive schematic diagram of a battery cell provided in some embodiments of the present application; Fig. 4 is a schematic diagram of a battery cell in a front view provided in some embodiments of the present application; Fig. 5 is a schematic cutaway view along line A-A in Fig. 4; Fig. 6 is an enlarged schematic diagram of square frame B in Fig. 5; Fig. 7 is an enlarged schematic diagram of circle frame C of Fig. 6; Fig. 8 is a schematic cutaway view of a first wall shown in Fig. 6; Fig. 9 is a structural schematic diagram of an insulating member shown in Fig. 3; and Fig. 10 is a structural schematic diagram of a support plate shown in Fig. 3.

Referring to Figs. 3 to 10, the battery cell 6 of the embodiments in the present application includes a shell 20, a pressure relief mechanism 30, an electrode assembly 10, and an insulating member 40. The pressure relief mechanism 30 is disposed on the shell 20. The electrode assembly 10 is accommodated within the shell 20. The insulating member 40 is accommodated within the shell 20, at least a portion of the insulating member 40 is located between the pressure relief mechanism 30 and the electrode assembly 10, and a portion of the insulating member 40 located between the pressure relief mechanism 30 and the electrode assembly 10 is provided with a first weak portion 411.

The shell 20 is formed as a hollow structure, and the shell 20 is formed with an accommodating space for accommodating the electrode assembly 10 and electrolyte. The shape of the shell 20 may be determined according to a specific shape of the electrode assembly 10. For example, in the case that the electrode assembly 10 is formed as a rectangular structure, a rectangular shell may be selected; in the case that the electrode assembly 10 is formed as a cylindrical structure, a cylindrical shell may be selected.

The shell 20 may be made of various materials, and for example, the material of the shell 20 may be metal or plastic. Optionally, the material of the shell 20 may be copper, iron, aluminum, steel, aluminum alloy, etc.

The electrode assembly 10 includes a positive electrode plate and a negative electrode plate. Exemplarily, the electrode assembly 10 generates electrical energy by oxidation and reduction reactions during insertion/detachment of ions in the positive and negative electrode plates. Optionally, the electrode assembly 10 further includes a separator for insulating and isolating the positive and negative electrode plates.

The electrode assembly 10 may be an electrode assembly of wound type, an electrode assembly of stacking type, or an electrode assembly of other types.

One or more electrode assemblies 10 may be provided. When a plurality of electrode assemblies 10 are provided, the plurality of electrode assemblies 10 may be arranged in a stacking manner. Exemplarily, as shown in Fig. 3, one electrode assembly 10 is provided.

In some examples, the pressure relief mechanism 30 and the shell 20 are components separately formed, which can be connected by welding, bonding, or other means. For example, the shell 20 is provided with a pressure relief hole 20a, the pressure relief hole 20a extends through the shell 20, and the pressure relief mechanism 30 is installed to the shell 20 and covers the pressure relief hole 20a so as to isolate spaces on an inner and outer sides of the shell 20. In alternative embodiments, the pressure relief mechanism 30 and the shell 20 may be formed as an integral structure.

The insulating member 40 may be entirely located between the pressure relief mechanism 30 and the electrode assembly 10, or only part of the insulating member is located between the pressure relief mechanism 30 and the electrode assembly 10, and the present embodiment does not limit this.

The insulating member 40 can only be adapted to insulate and isolate the pressure relief mechanism 30 from the electrode assembly 10. Alternatively, the insulating member 40 can not only insulate and isolate the pressure relief mechanism 30 from the electrode assembly 10, but also can insulate and isolate at least a portion of the electrode assembly 10 from the shell 20.

The first weak portion 411 is a part of the insulating member 40 with a relatively low strength, which is easily ruptured, broken, torn, or opened. For example, the strength of the first weak portion 411 is lower than that of a part of the insulating member 40 near the first weak portion 411.

In some examples, the present application may provide grooves, notches, through holes, or other structures in a predetermined region of the insulating member 40 to reduce the strength of a local portion of the insulating member 40, thereby forming the first weak portion 411 on the insulating member 40. For example, a thinning treatment is performed at a predetermined region of the insulating member 40, and the thinned part of the insulating member 40 forms the first weak portion 411. In other examples, a material treatment may be performed at a predetermined region of the insulating member 40, so that this region has a lower strength than that of the remaining region, in other words, this region is the first weak portion 411.

In the embodiments of the present application, the insulating member 40 can insulate and isolate the pressure relief mechanism 30 from the electrode assembly 10, to reduce the risk of the pressure relief mechanism 30 conducting the positive and negative electrodes of the electrode assembly 10 and improve safety. When thermal runaway occurs in the electrode assembly 10 and high-temperature and high-pressure substances are released, the first weak portion 411 of the insulating member 40 ruptures under the impact of high-temperature and high-pressure substances, forming a channel on the insulating member 40 for the high-temperature and high-pressure substances to pass through; after passing through the insulating member 40, the high-temperature and high-pressure substances act on the pressure relief mechanism 30, which then actuates the pressure relief mechanism 30 and are discharged to an outside of the battery cell 6 through the pressure relief mechanism 30. By providing the first weak portion 411 on the insulating member 40, the embodiments of the present application reduce the obstruction of the insulating member 40 to the high-temperature and high-pressure substances, so that the battery cell 6 can be released timely and safety is improved.

In some embodiments, the shell 20 includes a shell body 21 and a cap plate 22, the shell body 21 includes an opening, and the cap plate 22 is adapted to cover and close the opening.

The shell body 21 may be of various shapes and sizes, such as a rectangle, a cylinder, a hexagonal prism, etc. Specifically, the shape of the shell body 21 may be determined according to a specific shape and size of the electrode assembly 10. The shell body 21 may be made of various materials, such as copper, iron, aluminum, stainless steel, aluminum alloy, plastic cement, etc., and there are no particular limitations on this aspect in the embodiments of the present application.

The cap plate 22 may have a shape fitted to the shape of the shell body 21 to match with the shell body 21. Optionally, the cap plate 22 may be made of a material with a certain hardness and strength (such as aluminum alloy), so that the cap plate 22 is not deformed easily when being squeezed and collided, enabling the battery cell 6 to have higher structural strength and improving the safety performance. The cap plate 22 is connected to the shell body 21 through welding, bonding, snapping-fit, or other means.

The pressure relief mechanism 30 may be installed on the cap plate 22 or on the shell body 21, and the present embodiment does not limit this.

The shell body 21 may be formed as a structure with an opening on one side, and one cap plate 22 is provided to cover and close the opening of the shell body 21. Alternatively, the shell body 21 may be formed as a structure with openings on two sides, and two cap plates 22 are provided to cover and close the two openings of the shell body 21 respectively.

In some embodiments, an electrode terminal 50 is installed on the cap plate 22, and the electrode terminal 50 is adapted for electrically connecting with the electrode assembly 10. The electrode terminal 50 is adapted to electrically connect the electrode assembly 10 with an external circuit of the battery cell 6, and also to achieve charge and discharge of the electrode assembly 10.

In some embodiments, the pressure relief mechanism 30 includes a second weak portion 32. The second weak portion 32 is a part of the pressure relief mechanism 30 that is easily ruptured, broken, torn or opened.

In some embodiments, the pressure relief mechanism 30 includes a pressure relief portion 31, a second weak portion 32 and a connecting portion 33, the connecting portion 33 connects with the shell 20, and the second weak portion 32 connects the pressure relief portion 31 and the connecting portion 33.

The second weak portion 32 has a strength lower than that of the pressure relief portion 31 and of the connecting portion 33, and the second weak portion 32 is a part of the pressure relief mechanism 30 that is easily ruptured, broken, torn or opened.

The second weak portion 32 is located at a position where the pressure relief portion 31 and the connecting portion 33 are connected. In some examples, a predetermined region of the pressure relief mechanism 30 is thinned, the thinned part of the pressure relief mechanism 30 forms the second weak portion 32, and two parts of the pressure relief mechanism 30 which are divided by the second weak portion 32 and connected through the second weak portion 32 form the pressure relief portion 31 and the connecting portion 33 respectively. In some other examples, a material treatment is performed to a predetermined region of the pressure relief mechanism 30, so that this region has a strength lower than that of remaining regions; in other words, this region is the second weak portion 32, and two parts of the pressure relief mechanism 30 divided by the second weak portion 32 and connected through the second weak portion 32 form the pressure relief portion 31 and the connecting portion 33 respectively.

The connecting portion 33 may be connected to the shell 20 by bonding, welding, or other means. Alternatively, the connecting portion 33 may be integrally formed with the shell 20.

The pressure relief portion 31 is adapted to form a pressure relief channel when thermal runaway occurs in the battery cell 6. Exemplarily, when the high-temperature and high-pressure substances released by the electrode assembly 10 act on the second weak portion 32, the second weak portion 32 ruptures so that the pressure relief portion 31 is at least partially disconnected from the connecting portion 33, and the pressure relief portion 31 turns over or detaches from the shell 20 under the impact of the high-temperature and high-pressure substances, thereby forming the pressure relief channel on the pressure relief mechanism 30.

The present embodiment provides the second weak portion 32 on the pressure relief mechanism 30 so that the pressure relief mechanism 30 can rupture along the second weak portion 32 and form the pressure relief channel when thermal runaway occurs in the battery cell 6 occurs; thus, the pressure is released timely and the safety is improved.

In some embodiments, the connecting portion 33 is disposed surrounding the pressure relief portion 31 on an outer side of the pressure relief portion 31, and the second weak portion 32 is located between the pressure relief portion 31 and the connecting portion 33.

In some examples, the second weak portion 32 may surround the pressure relief portion 31 by a full circle. In other examples, the second weak portion 32 may surround the pressure relief portion 31 at a certain angle, for example, the second weak portion 32 may surround the pressure relief portion by 180 ° -270 °.

In some embodiments, the second weak portion 32 surrounds the pressure relief portion 31 by a full circle. When thermal runaway occurs in the battery cell 6, the second weak portion 32 is ruptured, and the pressure relief portion 31 is detached from the connecting portion 33 and the shell 20.

In some embodiments, the shell 20 is provided with the pressure relief hole 20a, and the pressure relief mechanism 30 is installed on the shell 20 and covers the pressure relief hole 20a.

Under normal conditions, the pressure relief mechanism 30 covers the pressure relief hole 20a to isolate the spaces on the inner and outer sides of the shell 20. When thermal runaway occurs in the battery cell 6, the pressure relief mechanism 30 ruptures along the second weak portion 32 to open the pressure relief hole 20a, thereby allowing the high-temperature and high-pressure substances to be discharged through the pressure relief hole 20a.

Exemplarily, the pressure relief hole 20a is located on a side of the pressure relief mechanism 30 facing the electrode assembly 10.

In some embodiments, in a thickness direction X of the pressure relief mechanism 30, a projection of the second weak portion 32 is located within a projection of the pressure relief hole 20a. The second weak portion 32 is disposed opposite to the pressure relief hole 20a to reduce risk of the second weak portion 32 being crushed by the shell 20 when the shell 20 is deformed. Exemplarily, the connecting portion 33 is welded to the shell 20. By disposing the second weak portion 32 opposite to the pressure relief hole 20a, a welding stress transmitted to the second weak portion 32 during a welding process may be reduced, thereby reducing risk of deformation of the second weak portion 32 and extending a service life of the pressure relief mechanism 30.

In some embodiments, in the thickness direction X, a portion of a projection of the connecting portion 33 is located within the projection of the pressure relief hole 20a. When thermal runaway occurs in the battery cell, under the impact of the high-temperature and high-pressure substances, the pressure relief portion 31 disconnects from the connecting portion 33 and detaches from the battery cell; a part of the connecting portion 33 opposite to the pressure relief hole 20a is folded outward under the impact of the high-temperature and high-pressure substances to reduce obstruction of the connecting portion 33 to the high-temperature and high-pressure substances.

In some embodiments, in the thickness direction X of the pressure relief mechanism 30, the first weak portion 411 is at least partially overlapped with the pressure relief hole 20a.

Exemplarily, a projection of the first weak portion 411 along the thickness direction X is partially overlapped with the projection of the pressure relief hole 20a along the thickness direction X. Alternatively, the projection of the first weak portion 411 along the thickness direction X is located within the projection of the pressure relief hole 20a along the thickness direction X.

When thermal runaway occurs in the battery cell 6, the pressure relief mechanism 30 opens the pressure relief hole 20a, the opened pressure relief hole 20a is opposite to a rupture site of the first weak portion 411, and the high-temperature and high-pressure substances passing through the rupture site of the first weak portion 411 can be quickly discharged through the pressure relief hole 20a, thereby improving discharge efficiency of the high-temperature and high-pressure substances.

In some embodiments, the insulating member 40 includes a first insulating plate 41, which includes a first insulating portion 412, a second insulating portion 413 and the first weak portion 411, and the first weak portion 411 connects the first insulating portion 412 and the second insulating portion 413. In the thickness direction X of the pressure relief mechanism 30, a projection of the second insulating portion 413 is located within the projection of the pressure relief hole 20a.

The first weak portion 411 has a strength lower than that of the first insulating portion 412 and that of the second insulating portion 413, and the first weak portion 411 is a part of the insulating member 40 that is easily ruptured, broken, torn or opened.

The second insulating portion 413 is adapted to form a pressure relief channel on the first insulating plate 41 when thermal runaway occurs in the battery cell 6. For example, when the high-temperature and high-pressure substances released by the electrode assembly 10 act on the first weak portion 411, the first weak portion 411 ruptures so that the second insulating portion 413 is at least partially disconnected from the first insulating portion 412, the second insulating portion 413 turns over or detached from the insulating member 40 under the impact of the high-temperature and high-pressure substances, forming the pressure relief channel on the first insulating plate 41.

When thermal runaway occurs in the battery cell 6, the pressure relief channel formed on the first insulating plate 41 at a region corresponding to the second insulating portion 413, is opposite to the pressure relief hole 20a, so that the high-temperature and high-pressure substances released by the electrode assembly 10 can be discharged quickly, thereby improving safety. The second insulating portion 413 can be discharged to the outside of the shell 20 through the pressure relief hole 20a, thereby reducing the risk of the second insulating portion 413 obstructing the high-temperature and high-pressure substances.

In some embodiments, the second insulating portion 413 and the first insulating portion 412 are both formed as flat plate structures.

In some embodiments, the first insulating portion 412 is disposed surrounding the second insulating portion 413 on an outer side of the second insulating portion 413, and the first weak portion 411 is located between the first insulating portion 412 and the second insulating portion 413.

Exemplarily, the second insulating portion 413 is located within a region enclosed by the first weak portion 411. Optionally, the first weak portion 411 surrounds the second insulating portion 413 by a full circle.

When thermal runaway occurs in the battery cell 6, the first weak portion 411 is ruptured, and the second insulating portion 413 is detached from the first insulating portion 412 so as to be discharged to the outside of the shell 20 through the pressure relief hole 20a.

In some embodiments, the second insulating portion 413 has a size smaller than that of the pressure relief hole 20a in any direction perpendicular to the thickness direction X.

Since the size of the second insulating portion 413 is smaller than that of the pressure relief hole 20a, when thermal runaway occurs in the battery cell 6, the second insulating portion 413 is not easily obstructed by the pressure relief mechanism 30, and can be quickly discharged to the outside of the shell 20 through the pressure relief hole 20a, thereby reducing influence of the second insulating portion 413 on the discharging rate.

In some embodiments, the size of the second insulating portion 413 may be larger than that of the pressure relief portion 31. When thermal runaway occurs in the battery cell, under the impact of the high-temperature and high-pressure substances, the pressure relief portion 31 disconnects from the connecting portion 33 and detaches from the battery cell; a part of the connecting portion 33 opposite to the pressure relief hole 20a is folded outward under the impact of high-temperature and high-pressure substances. Therefore, even if the size of the second insulating portion 413 is larger than that of the pressure relief portion 31, the connecting portion 33 can avoid the second insulating portion 413 by being folded, so that the second insulating portion 413 can be discharged to the outside of the shell 20 through the pressure relief hole 20a. Certainly, in alternative embodiments, in the thickness direction X, the projection of the second insulating portion 413 may be located within a projection of the pressure relief portion 31, to reduce risk of the pressure relief mechanism obstructing the second insulating portion 413.

In some embodiments, in the thickness direction X, the projection of the first weak portion 411 is located within the projection of the pressure relief hole 20a.

When thermal runaway occurs in the battery cell 6, the rupture site of the first weak portion 411 is opposite to the pressure relief hole 20a, the high-temperature and high-pressure substances passing through the rupture site of the first weak portion 411 can be quickly discharged through the pressure relief hole 20a, thereby improving the discharge efficiency of the high-temperature and high-pressure substances.

In some embodiments, the shell 20 includes a first wall 211, the pressure relief hole 20a is disposed on the first wall 211, the pressure relief mechanism 30 is connected to the first wall 211, and at least a portion of the first insulating portion 412 insulates and isolates the first wall 211 from the electrode assembly 10.

The first wall 211 may be the cap plate 22 or a part of the shell body 21.

At least a portion of the first wall 211 is located between the first wall 211 and the electrode assembly 10 to insulate and isolate the first wall 211 from the electrode assembly 10.

The first insulating portion 412 can insulate and isolate the first wall 211 from the electrode assembly 10, thereby reducing risk of the first wall 211 conducting the positive and negative electrodes of the electrode assembly 10 and improving safety.

In some embodiments, the battery cell 6 further includes a support plate 60, the support plate 60 is disposed between the first wall 211 and the electrode assembly 10. The support plate 60 and the first insulating plate 41 are arranged along the thickness direction X.

The support plate 60 may be disposed on a side of the first insulating plate 41 facing the electrode assembly 10, or on a side of the first insulating plate 41 facing away from to the electrode assembly 10.

The support plate 60 may be connected to the first insulating plate 41 or may be movable relative to the first insulating plate 41.

The support plate 60 can support the electrode assembly 10 to reduce a shaking amplitude of the electrode assembly 10 within the shell 20 when the battery cell 6 is subjected to external impacts, and to reduce risk of powder falling off from the electrode plates of the electrode assembly 10 (i.e., falling off of active substances of the electrode plates) due to that the shell 20 is squeezed. The support plate 60 can further increase a distance between the pressure relief mechanism 30 and the electrode assembly 10, thereby reducing risk of the electrode assembly 10 pressing and damaging the pressure relief mechanism 30 during shaking.

In some embodiments, the support plate 60 is formed as a flat plate structure.

In some embodiments, the first wall 211 is connected with an arc-shaped wall at its end, and the arc-shaped wall can release stress during forming process of the shell 20 and reduce stress concentration.

An inner surface of the arc-shaped wall is formed as an arc-shaped surface, and in the case that no support plate 60 is provided, the electrode plates of the electrode assembly 10 are prone to squeezing the arc-shaped surface when the electrode assembly 10 shakes, leading to the risk of powder loss of the electrode plates. By providing the support plate 60, the embodiments of the present application can increase a distance between the electrode plates and the arc-shaped surface, reduce a pressure between the electrode plates and the arc-shaped surface, and reduce the risk of powder loss.

In some embodiments, the support plate 60 is fixed to the first insulating portion 412.

Exemplarily, the support plate 60 may be fixed to the first insulating portion 412 by fusion welding, bonding, or other means.

By fixing the support plate 60 to the first insulating portion 412, a shaking amplitude of the support plate 60 within the shell 20 can be reduced, and a risk of friction between the support plate 60 and the first insulating plate 41 can be reduced.

The support plate 60 is not fixed with the second insulating portion 413. When thermal runaway occurs in the battery cell 6, the support plate 60 will not interfere with the discharge of the second insulating portion 413 to the outside of the battery cell 6.

In some embodiments, the support plate 60 is located between the first wall 211 and the first insulating plate 41. The support plate 60 includes a first support portion 61, a second support portion 62 and a third weak portion 63, the third weak portion 63 connects the first support portion 61 and the second support portion 62. In the thickness direction X, a projection of the second support portion 62 is located within the projection of the pressure relief hole 20a.

The third weak portion 63 has a strength lower than that of the first support portion 61 and that of the second support portion 62, and the third weak portion 63 is a part of the support plate 60 that is easily ruptured, broken, torn or opened.

In some examples, the present application may provide grooves, notches, through holes, or other structures at a predetermined region of the support plate 60 to reduce a local strength of the support plate 60, thereby forming the third weak portion 63 on the support plate 60. In some other examples, a material treatment may be performed at a predetermined region of the support plate 60, so that this region has a strength lower than that of remaining regions, in other words, this region is the third weak portion 63.

When thermal runaway occurs in the battery cell 6, the second support portion 62 is adapted to form a pressure relief channel on the support plate 60. Exemplarily, when the high-temperature and high-pressure substances released by the electrode assembly 10 act on the third weak portion 63, the third weak portion 63 ruptures so that the second support portion 62 is at least partially disconnected from the first support portion 61, and the second support portion 62 is turned over or detached from the support plate 60 under the impact of the high-temperature and high-pressure substances, forming the pressure relief channel on the support plate 60.

When thermal runaway occurs in the battery cell 6, the pressure relief channel formed on the support plate 60 at a region corresponding to the second support portion 62, is opposite to the pressure relief hole 20a, so that the high-temperature and high-pressure substances released by the electrode assembly 10 can be discharged quickly, thereby improving safety. The second support portion 62 may be discharged to the outside of the shell 20 through the pressure relief hole 20a, thereby reducing risk of the second support portion 62 obstructing the high-temperature and high-pressure substances.

In some embodiments, the second support portion 62 has a size smaller than that of the pressure relief hole 20a in any direction perpendicular to the thickness direction X.

Since the size of the second support portion 62 is smaller than that of the pressure relief hole 20a, when thermal runaway occurs in the battery cell 6, the second support portion 62 is not easily obstructed by the pressure relief mechanism 30, and can be quickly discharged to the outside of the shell 20 through the pressure relief hole 20a, thereby reducing influence of the second support portion 62 on the discharging rate.

In some embodiments, the size of the second support portion 62 may be larger than that of the pressure relief portion 31. When thermal runaway occurs in the battery cell, under the impact of the high-temperature and high-pressure substances, the pressure relief portion 31 disconnects from the connecting portion 33 and detaches from the battery cell; and the part of the connecting portion 33 opposite to the pressure relief hole 20a is folded outward under the impact of the high-temperature and high-pressure substances. Therefore, even if the size of the second support portion 62 is larger than that of the pressure relief portion 31, the connecting portion 33 can avoid the second support portion 62 by being folded, so that the second support portion 62 can be discharged to the outside of the shell 20 through the pressure relief hole 20a. Certainly, in alternative embodiments, in the thickness direction X, the projection of the second support portion 62 may be located within the projection of the pressure relief portion 31, to reduce the risk of the pressure relief mechanism obstructing the second support portion 62.

In some embodiments, the projection of the second insulating portion 413 is located within the projection of the second support portion 62.

When thermal runaway occurs in the battery cell 6, the pressure relief channel formed on the first insulating plate 41 at the region corresponding to the second insulating portion 413, the pressure relief channel formed on the support plate 60 at the region corresponding to the second support portion 62 and the pressure relief hole 20a are opposite to each other, and the high-temperature and high-pressure substances released by the electrode assembly 10 can be quickly discharged, thereby improving safety. The second insulating portion 413 may be discharged to the outside of the shell 20 through the pressure relief channel of the support plate 60 and the pressure relief hole 20a, thereby reducing the risk of the second insulating portion 413 obstructing the high-temperature and high-pressure substances.

In some embodiments, the size of the second insulating portion 413 is smaller than that of the second support portion 62 in any direction perpendicular to the thickness direction X.

Since the size of the second insulating portion 413 is smaller than that of the second support portion 62 and that of the pressure relief hole 20a, when thermal runaway occurs in the battery cell 6, the second insulating portion 413 is not easily obstructed by the pressure relief mechanism 30 and the support plate 60, and can be quickly discharged to the outside of the shell 20 through the pressure relief channel of the support plate 60 and the pressure relief hole 20a, thereby reducing the influence of the second insulating portion 413 on the discharging rate.

In any direction perpendicular to the thickness direction X, the size of the second insulating portion 413 is d1, the size of the second support portion 62 is d2, the size of the pressure relief hole 20a is d3, and d1≤d2≤d3.

In some embodiments, d1<d2<d3.

Optionally, 0.5×d3≤d1≤0.99×d3, 0.5×d3≤d2≤0.99×d3.

In some embodiments, a value of d3-d2 is in a range of 0.1 mm to 10 mm; optionally, the value of d3-d2 is in a range of 1 mm to 2 mm.

In some embodiments, a value of d2-d1 is in a range of 0.1 mm to 10 mm. optionally, the value of d2-d1 is in a range of 1 mm to 2 mm.

In some embodiments, the pressure relief hole 20a, the second insulating portion 413, and the second support portion 62 may have a same shape.

In some embodiments, in the thickness direction X, the third weak portion 63 and the first weak portion 411 do not overlap.

During a production process of the battery cell 6, residual metal particles may be left inside the shell body 21, and for example, when welding the cap plate 22 and the shell body 21, metal particles generated during welding may remain inside the shell body 21.

In a condition that the third weak portion 63 and the first weak portion 411 overlap with each other in the thickness direction X, the metal particles may puncture both of the third weak portion 63 and the first weak portion 411, causing a risk of the metal particles conducting the electrode assembly 10 with the shell 20, and thus leading to safety hazards.

The present application ensures that the third weak portion 63 and the first weak portion 411 do not overlap in the thickness direction X, so as to reduce the risk of both the first insulating plate 41 and the support plate 60 being punctured by metal particles and improve safety.

In some embodiments, the first insulating plate 41 is provided with a first positioning hole 414, the support plate 60 is provided with a second positioning hole 64, and the first positioning hole 414 and the second positioning hole 64 at least partially overlap with each other in the thickness direction X.

In the thickness direction X, the first positioning hole 414 and the second positioning hole 64 can partially overlap or completely overlap with each other.

When assembling the insulating member 40 with the support plate 60, the positioning of the insulating member 40 and the support plate 60 can be achieved through the coordination of the first positioning hole 414 and the second positioning hole 64, thereby reducing risk of misalignment and improving assembly efficiency.

In some embodiments, the insulating member 40 includes the first insulating plate 41, the first insulating plate 41 includes a first insulating portion 412, a second insulating portion 413 and a plurality of first weak portion 411, and the plurality of first weak portions 411 are connected between the first insulating portion 412 and the second insulating portion 413. The first insulating plate 41 is provided with a plurality of second through holes 415, and the plurality of second through holes 415 and the plurality of first weak portions 411 are arranged alternately in a peripheral direction of the second insulating portion 413 on the outer side of the second insulating portion 413.

The second through holes 415 may be square holes, circular holes, triangular holes, or through holes in other shapes.

By providing the plurality of second through holes 415 on the first insulating plate 41, the strength of the plurality of first weak portions 411 can be lowered, thereby enabling the first insulating plate 41 to rupture at the predetermined region.

The second through holes 415 have relatively small apertures, and thus it is difficult for the electrode assembly 10 to pass through the second through holes 415. Exemplarily, the second through holes 415 may be formed by a needle punching process, and the plurality of second through holes 415 are approximately formed as a needle punched line. Optionally, the second through holes 415 are strip-like holes, each of which has a width of 0.1 mm-0.5 mm and a length of 0.6 mm-2 mm, and a spacing between adjacent second through holes 415 may be in a range of 1 mm to 5 mm.

In some embodiments, the support plate 60 is provided with a plurality of fourth through holes 65, and the plurality of fourth through holes 65 and a plurality of third weak portions 63 are alternately arranged in a peripheral direction of the second support portion 62 on an outer side of the second support portion 62. By providing the plurality of fourth through holes 65 on the support plate 60, strength of the plurality of third weak portions 63 can be reduced, thereby enabling the support plate 60 to rupture at the predetermined region.

In some embodiments, the second through holes 415 and the fourth through holes 65 do not overlap with each other in the thickness direction X, which can reduce the risk of metal particles passing through the second through hole 415 and the fourth through hole 65 at the same time and improve safety. Further, since the second through holes 415 and the fourth through holes 65 do not overlap with each other in the thickness direction X, a creepage distance between the electrode assembly 10 and the shell 20 can be increased, thereby reducing electric leakage, and improving insulation performance between the electrode assembly 10 and the shell 20.

In some embodiments, the shell 20 includes the shell body 21 and the cap plate 22, the shell body 21 has an opening, and the cap plate 22 is adapted to cover and close the opening. The pressure relief mechanism 30 is disposed on the shell body 21 or the cap plate 22.

In some embodiments, the pressure relief mechanism 30 is disposed on the shell body 21, the insulating member 40 includes a receiving chamber 40a, at least a portion of the electrode assembly 10 is accommodated within the receiving chamber 40a, and the insulating member 40 insulates and isolates at least a portion of the electrode assembly 10 from the shell body 21.

Since the insulating member 40 insulates and isolates at least a portion of the electrode assembly 10 from the shell body 21, the risk of the shell body 21 conducting the positive and negative electrodes of the electrode assembly 10 can be reduced and safety can be improved.

The insulating member 40 can isolate the metal particles from the electrode assembly 10, thereby reducing the risk of the metal particles conducting the electrode assembly 10 with the shell body 21, and improving safety.

In some embodiments, the shell body 21 includes a first wall 211, a second wall 212, and two third walls 213, the first wall 211 and the second wall 212 are disposed opposite each other in a first direction, the two third walls 213 are disposed opposite each other in a second direction Y, and each of the third walls 213 connects the first wall 211 and the second wall 212. The pressure relief mechanism 30 is disposed on the first wall 211. The first direction intersects with the second direction Y.

Exemplarily, the first direction is perpendicular to the second direction Y.

Exemplarily, the first direction is parallel to the thickness direction X of the pressure relief mechanism 30.

Exemplarily, the first wall 211, the second wall 212, and the third walls 213 are all formed as substantially flat plates in shape. The first wall 211 and second wall 212 are both perpendicular to the first direction, while the third walls 213 are perpendicular to the second direction Y.

In some embodiments, the first wall 211 has an area smaller than that of each of the third walls 213.

The electrode assembly 10 may expand during charging; compared to the first wall 211, the third walls 213 have larger areas, are also subjected to larger expansion forces applied by the electrode assembly 10, and thus are more easily deformed. The embodiments of the present application disposes the pressure relief mechanism 30 on the first wall 211 with a smaller area, so as to reduce deformation of the pressure relief mechanism 30, slow down aging of the pressure relief mechanism 30, and extend the service life of the pressure relief mechanism 30.

In some embodiments, the insulating member 40 includes a first insulating plate 41, two second insulating plates 42 and two third insulating plates 43, the first insulating plate 41 is disposed between the electrode assembly 10 and the first wall 211, the two third insulating plates 43 are connected to two ends of the first insulating plate 41 in the second direction Y, and the third insulating plates 43 are each located between the electrode assembly 10 and the corresponding third walls 213. The two second insulating plates 42 are respectively connected to the two third insulating plates 43 and are located between the electrode assembly 10 and the second wall 212.

The insulating member 40 can wrap the electrode assembly 10 around it to reduce the risk of metal particles conducting the electrode assembly 10 with the shell body 21, thereby improving safety.

Exemplarily, the insulating member 40 may be formed by bending an insulating sheet.

In some embodiments, the two second insulating plates 42 at least partially overlap with each other in the first direction, and portions of the two second insulating plates 42 overlapping with each other in the first direction are connected in the first direction.

By connecting the two second insulating plates 42, a risk of the insulating member 40 opening when the battery cell 6 is subjected to external impacts can be reduced, thereby ensuring insulation between the electrode assembly 10 and the shell body 21.

Exemplarily, the portions of the two second insulating plates 42 overlapping with each other in the first direction are connected by fusion welding.

In the condition that the pressure relief mechanism 30 is disposed on the second wall 212, it may be necessary to provide weak structures in the overlapping portions of the two second insulating plates 42. Since a total thickness of the overlapping portions of the two second insulating plates 42 is relatively large, it is difficult for the two second insulating plates 42 to rupture simultaneously when thermal runaway occurs in the battery cell 6, thereby affecting the safety. Further, the insulating member 40 is formed by bending an insulating sheet, and it is also difficult to align the weak structures on the two second insulating plates 42 during a bending process. Therefore, the present application preferably provides the pressure relief mechanism 30 on the first wall 211 which is far away from the second insulating plate 42.

In some embodiments, the shell body 21 includes openings 21a at two ends in the third direction Z, and two cap plates 22 are provided, which are adapted to cover and close the two openings 21a respectively.

The receiving chamber 40a of the insulating member 40 also includes openings at two ends in the third direction Z, so that tabs of the electrode assembly 10 can be connected to electrode terminals 50 installed on the cap plates 22.

In some embodiments, the shell 20 includes the first wall 211, and the pressure relief mechanism 30 is installed on the first wall 211. The first wall 211 includes an inner surface 211a facing the electrode assembly 10 and an outer surface 211b facing away from the electrode assembly 10, and the inner surface 211a is closer to the electrode assembly 10 than the pressure relief mechanism 30.

The pressure relief mechanism 30 is spaced apart from the inner surface 211a at a certain distance so as to reduce the risk of components (such as the insulating member 40) inside the shell 20 squeezing the pressure relief mechanism 30, delay the aging of the pressure relief mechanism 30, and improve safety.

In some embodiments, the pressure relief mechanism 30 as a whole is closer to the electrode assembly 10 than the outer surface 211b, and in this way, the risk of the pressure relief mechanism 30 being damaged by impurities outside the battery cell 6 can be reduced.

In some embodiments, the first wall 211 is provided with the pressure relief hole 20a, and the pressure relief mechanism 30 covers the pressure relief hole 20a. The pressure relief hole 20a may be located on a side of the pressure relief mechanism 30 facing the electrode assembly 10, or on a side of the pressure relief mechanism 30 facing away from the electrode assembly 10.

In some embodiments, the first wall 211 is provided with a shell recess 20b that is recessed from the outer surface 211b, and at least a portion of the pressure relief mechanism 30 is accommodated in the shell recess 20b and abuts against a bottom surface 20c of the shell recess 20b. The pressure relief hole 20a extends from the inner surface 211a to the bottom surface 20c.

In some embodiments, the entire pressure relief mechanism 30 is accommodated in the shell recess 20b.

In some embodiments, the battery cell 6 includes a protective sheet 70, the protective sheet 70 is connected to the shell 20 and located on an outer side of the pressure relief mechanism 30. The protective sheet 70 covers the pressure relief mechanism 30 to isolate the pressure relief mechanism 30 from an external environment of the battery cell 6. Optionally, the protective sheet 70 is made of PET. The protective sheet 70 has a relatively low strength and it is easy to be broken by the high-temperature and high-pressure substances, and thus has little influence on the discharge of the high-temperature and high-pressure substances.

In some embodiments, the shell recess 20b is in a step shape, and the protective sheet 70 is accommodated in the shell recess 20b and connected to a step surface of the shell recess 20b.

In some embodiments, the first weak portion 411 is configured to rupture when the internal pressure of the battery cell 6 reaches a first threshold, the second weak portion 32 is configured to rupture when the internal pressure of the battery cell 6 reaches a second threshold, and the third weak portion 63 is configured to rupture when the internal pressure of the battery cell 6 reaches a third threshold. Optionally, the second threshold≥the third threshold≥the first threshold.

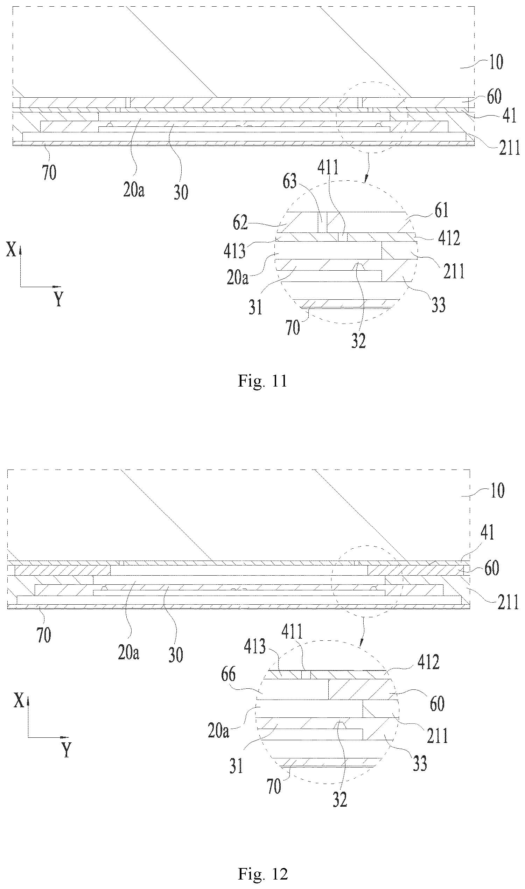

Fig. 11 is a schematic partial cutaway view of a battery cell provided in some other embodiments of the present application.

As shown in Fig. 11, in some embodiments, the support plate 60 is located between the electrode assembly 10 and the first insulating plate 41. The support plate 60 includes a first support portion 61, a second support portion 62 and a third weak portion 63, and the third weak portion 63 connects the first support portion 61 and the second support portion 62. In the thickness direction X, a projection of the second support portion 62 is located within the projection of the second insulating portion 413.

When thermal runaway occurs in the battery cell 6, a pressure relief channel formed on the support plate 60 at a region corresponding to the second support portion 62 is opposite to the pressure relief channel formed on the first insulating plate 41 at the region corresponding to the second insulating portion 413, so that the high-temperature and high-pressure substances released by the electrode assembly 10 can be discharged quickly, thereby improving safety. The second support portion 62 can be discharged to the outside of the shell 20 through the pressure relief channel of the first insulating plate 41 and the pressure relief hole 20a, thereby reducing the risk of the second support portion 62 obstructing the high-temperature and high-pressure substances.

In some embodiments, the second support portion 62 has a size smaller than that of the second insulating portion 413 in any direction perpendicular to the thickness direction X.

Since the size of the second support portion 62 is smaller than that of the second insulating portion 413, when thermal runway occurs in the battery cell 6, the second support portion 62 is not easily obstructed by the first insulating plate 41, and can be quickly discharged to the outside of the shell 20 through the pressure relief channel of the first insulating plate 41, thereby reducing influence of the second support portion 62 on the discharging rate.

Fig. 12 is a schematic partial cutaway view of a battery cell provided in some other embodiments of the present application.

As shown in Fig. 12, in some embodiments, the support plate 60 is located between the first wall 211 and the first insulating plate 41. The support plate 60 is provided with a first through hole 66; at least a portion of the first through hole 66 is located between the second insulating portion 413 and the pressure relief hole 20a in the thickness direction X.

When thermal runaway occurs in the battery cell 6, the pressure relief channel formed on the first insulating plate 41 at the region corresponding to the second insulating portion 413, the first through hole 66 and the pressure relief hole 20a are opposite to each other, and the high-temperature and high-pressure substances released by the electrode assembly 10 can be quickly discharged, thereby improving safety.

The present embodiment reduces the obstruction of the support plate 60 to the high-temperature and high-pressure substances by providing the first through hole 66 on the support plate 60, the first through hole 66 can communicate the pressure relief channel of the first insulating plate 41 with the pressure relief hole 20a, thereby timely releasing pressure and improving safety of the battery cell 6.

In some embodiments, in the thickness direction X, the projection of the second insulating portion 413 is located within a projection of the first through hole 66.

The second insulating portion 413 may be discharged to the outside of the shell 20 through the first through hole 66 and pressure relief hole 20a, thereby reducing the risk of the second insulating portion 413 obstructing the high-temperature and high-pressure substances and improving discharge efficiency.

In some other embodiments, a plurality of support plates are provided between the first wall and the first insulating plate, and the plurality of support plates are spaced apart from each other. For example, two support plates are provided, and an avoidance gap is formed between the two support plates; in the thickness direction, the projection of the second insulating portion is located within a projection of the avoidance gap.

In the present embodiment, two support plates are spaced apart from each other to reduce the obstruction of the support plates to the high-temperature and high-pressure substances, and the avoidance gap can communicate the pressure relief channel of the first insulating plate with the pressure relief hole, thereby timely releasing the internal pressure of the battery cell and improving the safety of the battery cell.

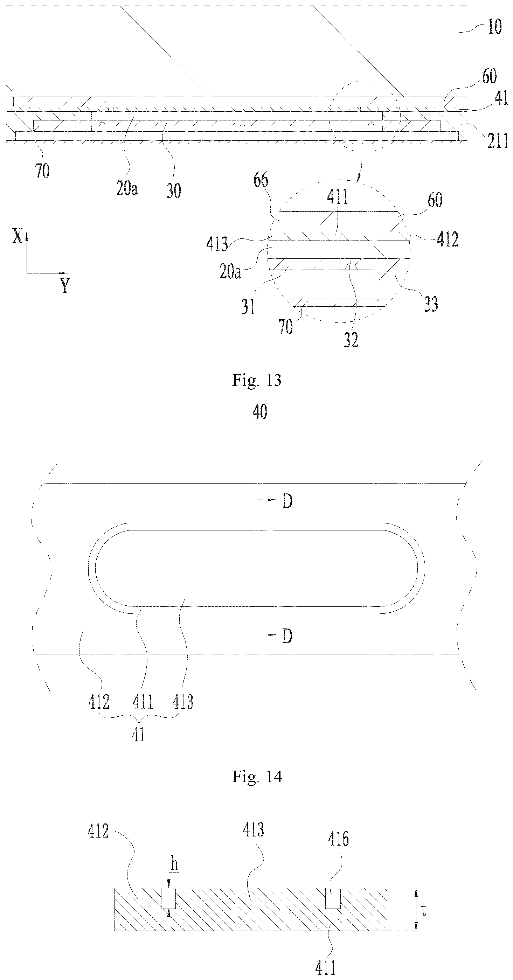

Fig. 13 is a schematic partial cutaway view of a battery cell provided in some other embodiments of the present application.

As shown in Fig. 13, in some embodiments, the support plate 60 is located between the electrode assembly 10 and the first insulating plate 41. The support plate 60 is provided with a first through hole 66. In the thickness direction X, the projection of the second insulating portion 413 is at least partially overlapped with a projection of the first through hole 66.

This embodiment reduces the obstruction of the support plate 60 to the high-temperature and high-pressure substances by providing first through hole 66, and the high-temperature and high-pressure substances can be quickly discharged through the first through hole 66, the pressure relief channel of the first insulating plate 41 and the pressure relief hole 20a, thereby timely releasing the internal pressure of the battery cell 6 and improving the safety of the battery cell.

In some embodiments, in the thickness direction X, a projection of the first through hole 66 is located within the projection of the second insulating portion 413.

In some other embodiments, a plurality of support plates are located between the electrode assembly and the first insulating plate, and the plurality of support plates are spaced apart from each other. Exemplarily, two support plates are provided, and an avoidance gap is formed between the two support plates; in the thickness direction, the projection of the second insulating portion is at least partially overlapped with a projection of the avoidance gap.

In the present embodiment, the two support plates are spaced apart from each other to reduce the obstruction of the support plates to the high-temperature and high-pressure substances, and the high-temperature and high-pressure substances can be quickly discharged through the avoidance gap, the pressure relief channel of the first insulating plate and the pressure relief hole, thereby timely releasing the internal pressure of the battery cell and improving the safety of the battery cell.

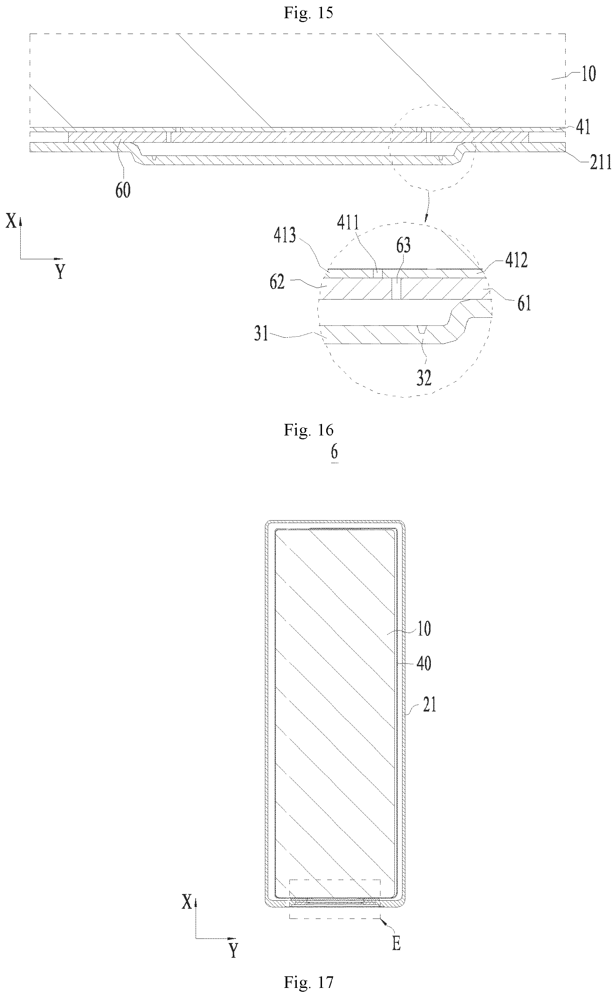

Fig. 14 is a partial schematic diagram of an insulating member of a battery cell provided in some embodiments of the present application; and Fig. 15 is a schematic local cross-sectional view along line D-D in Fig. 14.

As shown in Figs. 14 and 15, in some embodiments, the insulating member 40 includes a first insulating plate 41, the first insulating plate 41 is provided with a recess portion 416 on its surface, and a bottom wall of the recess portion 416 forms a first weak portion 411.

In the present embodiment, the recess portion 416 can be formed on the first insulating plate 41 by squeezing, removing some material, or other means.

The recess portion 416 may be recessed from a surface of the first insulating plate 41 facing the first wall 211, or from a surface of the first insulating plate 41 facing away from the first wall 211.

By providing the recess portion 416 on the first insulating plate 41, the thickness and strength of the first insulating plate 41 can be reduced locally, so that the first insulating plate 41 can rupture at a predetermined region. Compared to the manner of providing the second through holes 415, the risk of metal particles passing through the first insulating plate 41 can be reduced by providing the recess portion 416.

In some embodiments, a ratio of a depth h of the recess portion 416 to a thickness t of the first insulating plate 41 is greater than or equal to 0.3.

The depth h is the minimum size of the recess portion 416 in the thickness direction X of the first insulating plate 41. The thickness t is the minimum size of a region of the first insulating plate 41 near the recess portion 416.

The smaller the value of h/t, the higher the strength of the first weak portion 411. In the condition that the value of h/t is too small, the first weak portion 411 is less likely to rupture when thermal runaway occurs in the battery cell 6, resulting in unsmooth discharge. This embodiment makes the value of h/t greater than or equal to 0.3, so that the first weak portion 411 of the first insulating plate 41 can rupture in a timely manner, thereby timely releasing the internal pressure of the battery cell 6 and improving safety.

In some embodiments, h/t≤0.9. In the condition that the value of h/t is too large, the strength of the first weak portion 411 is low, and when the battery cell 6 is subjected to external impacts, the first weak portion 411 may rupture, leading to the risk of insulation failure. The embodiments of the present application reduces risk of early rupture of the first weak portion 411 by making h/t≤0.9.

In some embodiments, the recess portion 416 is formed in an annular shape.

By providing an annular recess portion 416 on the first insulating plate 41, an annular first weak portion 411 can be formed on the first insulating plate 41; when the annular first weak portion 411 ruptures, the second insulating portion 413 can completely break away from the first insulating portion 412, and can be discharged to the outside of the battery cell 6 through the pressure relief hole 20a.

In some embodiments, the second weak portion can be formed by providing a recess portion on the pressure relief mechanism, and the third weak portion can be formed by providing a recess portion on the support plate.

Fig. 16 is a schematic partial cutaway view of a battery cell provided in some other embodiments of the present application.

As shown in Fig. 16, in some embodiments, the pressure relief mechanism 30 includes a pressure relief portion 31 and a second weak portion 32 disposed surrounding the pressure relief portion 31 on an outer side of the pressure relief portion 31. The insulating member 40 includes a first insulating plate 41, which includes a first insulating portion 412, a second insulating portion 413, and a first weak portion 411, the first weak portion 411 connects the first insulating portion 412 and the second insulating portion 413. In the thickness direction X of the pressure relief mechanism 30, a projection of the second insulating portion 413 is located within a projection of the pressure relief portion 31.

When thermal runaway occurs in the battery cell 6, a pressure relief channel formed by the first insulating plate 41 at a region corresponding to the second insulating portion 413 is opposite to a pressure relief channel formed by the pressure relief mechanism 30 at a region corresponding to the pressure relief portion 31, thereby allowing the high-temperature and high-pressure substances released by the electrode assembly 10 to be quickly discharged, and improving safety. The second insulating portion 413 can be discharged to the outside of the shell through the pressure relief channel of the pressure relief mechanism 30, thereby reducing the risk of the second insulating portion 413 obstructing the high-temperature and high-pressure substances.

In some embodiments, the pressure relief mechanism 30 is integrally formed with the first wall 211.

In some embodiments, the second insulating portion 413 has a size smaller than that of the pressure relief portion 31 in any direction perpendicular to the thickness direction X.

In some embodiments, the shell 20 includes a first wall 211, and the pressure relief mechanism 30 is disposed on the first wall 211. The battery cell further includes a support plate 60, and the support plate 60 is located between the first wall 211 and the first insulating plate 41; the support plate 60 includes a first support portion 61, a second support portion 62 and a third weak portion 63, and the third weak portion 63 connects the first support portion 61 and the second support portion 62. In the thickness direction X, a projection of the second support portion 62 is located within the projection of the pressure relief portion 31.

When thermal runaway occurs in the battery cell 6, a pressure relief channel formed on the support plate 60 at a region corresponding to the second support portion 62 is opposite to the pressure relief channel formed by the pressure relief mechanism 30 at the region corresponding to the pressure relief portion 31, so that the high-temperature and high-pressure substances released by the electrode assembly 10 can be discharged quickly, thereby improving safety. The second support portion 62 can be discharged to the outside of the shell 20 through the pressure relief channel of the pressure relief mechanism 30, thereby reducing risk of the second support portion 62 obstructing the high-temperature and high-pressure substances.

In some embodiments, the second support portion 62 has a size smaller than that of the pressure relief portion 31 in any direction perpendicular to the thickness direction X.

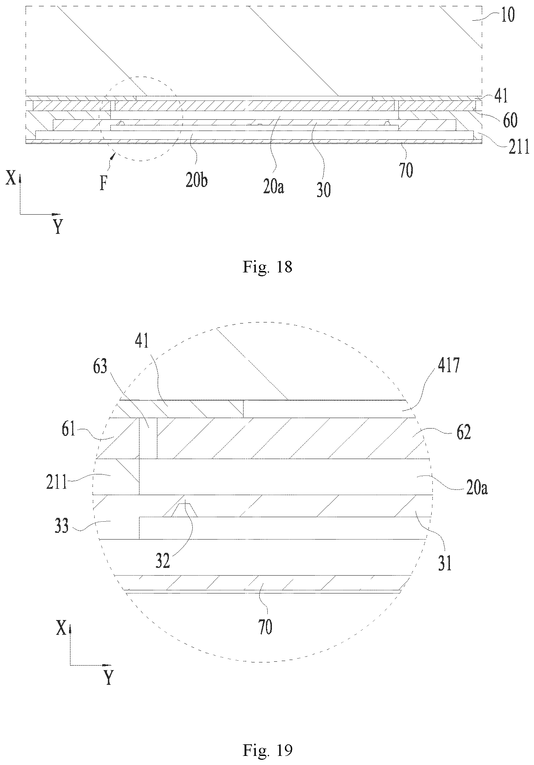

Fig. 17 is a schematic partial cutaway view of a battery cell provided in some other embodiments of the present application; Fig. 18 is an enlarged schematic diagram of square frame E in Fig. 17; and Fig. 19 is an enlarged schematic diagram of circular frame F in Fig. 18.

As shown in Figs. 17 to 19, the embodiments of the present application provide a battery cell 6, which includes a shell 20, a pressure relief mechanism 30, an electrode assembly 10, and an insulating member 40. The pressure relief mechanism 30 is disposed on the shell 20. The electrode assembly 10 is accommodated within the shell 20. The insulating member 40 is accommodated within the shell 20 and is adapted to insulate and isolate at least a portion of the electrode assembly 10 from the shell 20. The insulating member 40 is provided with a third through hole 417, and at least a portion of the third through hole 417 is located between the pressure relief mechanism 30 and the electrode assembly 10.

When thermal runaway of the electrode assembly 10 occurs and high-temperature and high-pressure substances are released, the high-temperature and high-pressure substances pass through the third through hole 417 and act on the pressure relief mechanism 30; and then, the pressure relief mechanism 30 is activated and the high-temperature and high-pressure substances are discharged to an outside of the battery cell 6 through the pressure relief mechanism 30. By providing the third through hole 417 on the insulating member 40, the embodiments of the present application can reduce obstruction of the insulating member 40 to the high-temperature and high-pressure substances; thus, a pressure of the battery cell 6 can be released timely, and safety can be improved.

In some embodiments, in the thickness direction X, a projection of the third through hole 417 is at least partially overlapped with the projection of the pressure relief hole 20a. Optionally, in the thickness direction X, the projection of the third through hole 417 is located within the projection of the pressure relief hole 20a.

In some embodiments, the projection of the third through hole 417 along the thickness direction X has an area S1, and the projection of the pressure relief hole 20a along the thickness direction X has an area of S2. S1/S2≥0.5.

In some embodiments, the battery cell 6 further includes a support plate 60, and at least a portion of the support plate 60 is located between the pressure relief mechanism 30 and the insulating member 40 and covers the third through hole 417. A portion of the support plate 60 located between the pressure relief mechanism 30 and the third through hole 417 is provided with a third weak portion 63.

The support plate 60 may only cover a portion of the third through hole 417, or it can cover the entire third through hole 417.

Since the support plate 60 covers the third through hole 417 to insulate and isolate the electrode assembly 10 from the pressure relief mechanism 30, a risk of the electrode assembly 10 squeezing the pressure relief mechanism 30 through the third through hole 417 is reduced. When thermal runaway of the electrode assembly 10 occurs and high-temperature and high-pressure substances are released, the high-temperature and high-pressure substances act on the third weak portion 63, and the third weak portion 63 of the support plate 60 ruptures under the impact of the high-temperature and high-pressure substances, forming a channel for the high-temperature and high-pressure substances to pass through on the support plate 60; the high-temperature and high-pressure substances act on the pressure relief mechanism 30 after passing through the support plate 60, so that the pressure relief mechanism 30 is activated and the pressure relief hole 20a is opened, and then the high-temperature and high-pressure substances are discharged to the outside of the battery cell. The embodiments of the present application reduces obstruction of the support plate 60 to the high-temperature and high-pressure substances by providing the third weak portion 63 on the support plate 60, so that the pressure of the battery cell 6 can be released and the safety can be improved.

In some embodiments, the support plate 60 is located between the first wall 211 and the first insulating plate 41. The support plate 60 includes a first support portion 61, a second support portion 62 and a third weak portion 63, and the third weak portion 63 connects the first support portion 61 and the second support portion 62. In the thickness direction X, a projection of the second support portion 62 is located within the projection of the pressure relief hole 20a.

In some embodiments, the second support portion 62 has a size smaller than that of the pressure relief hole 20a in any direction perpendicular to the thickness direction X.

In some embodiments, the projection of the third through hole 417 is located within the second support portion 62.

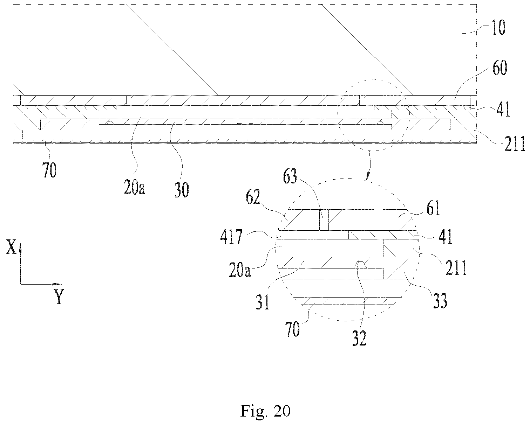

Fig. 20 is a schematic partial cutaway view of a battery cell provided in some other embodiments of the present application.

As shown in Fig. 20, in some embodiments, the battery cell 6 further includes a support plate 60, and at least a portion of the support plate 60 is disposed between the electrode assembly 10 and the insulating member 40 and covers the third through hole 417. A portion of the support plate 60 located between the electrode assembly 10 and the third through hole 417 is provided with a third weak portion 63.

The support plate 60 covers the third through hole 417, so as to insulate and isolate the electrode assembly 10 from the pressure relief mechanism 30, thereby reducing the risk of the electrode assembly 10 squeezing the pressure relief mechanism 30 through the third through hole 417. When thermal runaway of the electrode assembly 10 occurs and the high-temperature and high-pressure substances are released, the high-temperature and high-pressure substances act on the third weak portion 63, and the third weak portion 63 of the support plate 60 ruptures under the impact of the high-temperature and high-pressure substances, forming a channel for the high-temperature and high-pressure substances to pass through on the support plate 60; the high-temperature and high-pressure substances act on the pressure relief mechanism 30 through the third through hole 417 after passing through the support plate 60, so that the pressure relief mechanism 30 is activated and the pressure relief hole 20a is opened, and then the high-temperature and high-pressure substances are discharged to the outside of the battery cell. The embodiments of the present application reduces obstruction of the support plate 60 to the high-temperature and high-pressure substances by providing the third weak portion 63 on the support plate 60, so that the pressure of the battery cell 6 can be released in a timely manner and the safety is improved.

In some embodiments, the support plate 60 includes a first support portion 61, a second support portion 62 and a third weak portion 63, and the third weak portion 63 connects the first support portion 61 and the second support portion 62. In the thickness direction X, a projection of the second support portion 62 is located within the projection of the third through hole 417.

When the third weak portion 63 ruptures, the second support portion 62 can be discharged to the outside of the battery cell 6 through the third through hole 417 and the pressure relief hole 20a.

According to some embodiments of the present application, the present application further provides a battery, including a plurality of battery cells according to any of the above embodiments.

According to some embodiments of the present application, the present application further provides an electricity consuming device, including a battery cell according to any of the above embodiments, and the battery cell is adapted to provide electrical energy to the electricity consuming device. The electricity consuming device may be any of the above-mentioned devices or systems that use the battery cell.

According to some embodiments of the present application, referring to Figs. 3 to 10, the embodiments of the present application provide a battery cell 6, which includes a shell 20, a pressure relief mechanism 30, an electrode assembly 10, an insulating member 40, and a support plate 60. The electrode assembly 10 is accommodated within the shell 20.

The shell 20 includes a shell body 21 and two cap plates 22, the shell body 21 includes openings at two ends, and the two cap plates 22 cover and close the two openings respectively. The shell body 21 includes a first wall 211, a second wall 212 and two third walls 213, the first wall 211 and the second wall 212 are disposed opposite each other in a first direction, the two third walls 213 are disposed opposite each other in a second direction Y, and each third wall 213 connects the first wall 211 and the second wall 212. The pressure relief mechanism 30 is disposed on the first wall 211.

The first wall 211 is provided with a pressure relief hole 20a, and the pressure relief mechanism 30 is connected to the first wall 211 and covers the pressure relief hole 20a.

The insulating member 40 includes a first insulating plate 41, two second insulating plates 42 and two third insulating plates 43, the first insulating plate 41 is disposed between the electrode assembly 10 and the first wall 211, the two third insulating plates 43 are connected to two ends of the first insulating plate 41 in the second direction Y, and the third insulating plates 43 are each located between the electrode assembly 10 and the corresponding third walls 213. The two second insulating plates 42 are respectively connected to the two third insulating plates 43 and are located between the electrode assembly 10 and second wall 212. The two second insulating plates 42 at least partially overlap with each other in the first direction, and portions of the two second insulating plates 42 overlapping with each other in the first direction are connected to each other.

The first insulating plate 41 includes a first insulating portion 412, a second insulating portion 413 and a first weak portion 411, and the first weak portion 411 connects the first insulating portion 412 and the second insulating portion 413. The first weak portion 411 is disposed around an outer periphery of the second insulating portion 413. The support plate 60 is disposed between the first wall 211 and the first insulating plate 41 and is fixed to the first insulating portion 412. The support plate 60 includes a first support portion 61, a second support portion 62 and a third weak portion 63, and the third weak portion 63 connects the first support portion 61 and the second support portion 62. The third weak portion 63 is disposed around an outer periphery of the second support portion 62.

In a thickness direction X of the pressure relief mechanism 30, a projection of the second insulating portion 413 is located within a projection of the second support portion 62, and the projection of the second support portion 62 is located within a projection of the pressure relief hole 20a.

It should be noted that in the absence of conflicts, the embodiments and the features in the embodiments of the present application can be combined with each other.

Finally, it should be noted that the above embodiments are only used to illustrate the technical solutions of the present application.

## Claims

1. A battery cell (6), comprising:
a shell (20);
a pressure relief mechanism (30) disposed on the shell (20);
an electrode assembly (10) accommodated within the shell (20); and
an insulating member (40) accommodated within the shell (20), wherein at least a portion of the insulating member (40) is located between the pressure relief mechanism (30) and the electrode assembly (10), and a portion of the insulating member (40) located between the pressure relief mechanism (30) and the electrode assembly (10) is provided with a first weak portion (411);
wherein the insulating member (40) comprises a first insulating plate (41), the first insulating plate (41) comprises a first insulating portion (412), a second insulating portion (413) and a plurality of first weak portions (411), and the plurality of the first weak portions (411) are connected between the first insulating portion (412) and the second insulating portion (413); and
**characterized in that**
the first insulating plate (41) is provided with a plurality of second through holes (415), and the plurality of second through holes (415) and the plurality of first weak portions (411) are alternately arranged in a peripheral direction of the second insulating portion (413) on an outer side of the second insulating portion (413).

2. The battery cell (6) according to claim 1, wherein the pressure relief mechanism (30) comprises a second weak portion (32).

3. The battery cell (6) according to claim 1 or 2, wherein the shell (20) is provided with a pressure relief hole (20a), and the pressure relief mechanism (30) is installed on the shell (20) and covers the pressure relief hole (20a).

4. The battery cell (6) according to claim 3, wherein the first weak portion (411) at least partially overlaps with the pressure relief hole (20a) in a thickness direction (X) of the pressure relief mechanism (30).

5. The battery cell (6) according to claim 3 or 4, wherein the insulating member (40) comprises a first insulating plate (41), the first insulating plate (41) comprises a first insulating portion (412), a second insulating portion (413) and the first weak portion (411), and the first weak portion (411) connects the first insulating portion (412) and the second insulating portion (413); and
in the thickness direction (X) of the pressure relief mechanism (30), a projection of the second insulating portion (413) is located within a projection of the pressure relief hole (20a).

6. The battery cell (6) according to claim 5, wherein the first insulating portion (412) is disposed surrounding the second insulating portion (413) on an outer side of the second insulating portion (413), and the first weak portion (411) is located between the first insulating portion (412) and the second insulating portion (413).

7. The battery cell (6) according to claim 5 or 6, wherein the second insulating portion (413) has a size smaller than that of the pressure relief hole (20a) in any direction perpendicular to the thickness direction (X).

8. The battery cell (6) according to any of claims 5 to 7, wherein in the thickness direction (X), a projection of the first weak portion (411) is located within the projection of the pressure relief hole (20a).

9. The battery cell (6) according to any of claims 5 to 8, wherein the shell (20) comprises a first wall (211), the pressure relief hole (20a) is disposed on the first wall (211), the pressure relief mechanism (30) is connected with the first wall (211), and at least a portion of the first insulating portion (412) insulates and isolates the first wall (211) from the electrode assembly (10).

10. The battery cell (6) according to any of claims 1 to 9, wherein the shell (20) comprises a first wall (211), and the pressure relief mechanism (30) is installed on the first wall (211);
the first wall (211) comprises an inner surface (211a) facing the electrode assembly (10) and an outer surface (211b) facing away from the electrode assembly (10), and the inner surface (211a) is closer to the electrode assembly (10) than the pressure relief mechanism (30).

11. The battery cell (6) according to claim 1, wherein the pressure relief mechanism (30) comprises a pressure relief portion (31) and a second weak portion (32) disposed surrounding the pressure relief portion (31) on an outer side of the pressure relief portion (31);
the insulating member (40) comprises a first insulating plate (41), the first insulating plate (41) comprises a first insulating portion (412), a second insulating portion (413) and the first weak portion (411), and the first weak portion (411) connects the first insulating portion (412) and the second insulating portion (413); and
in the thickness direction (X) of the pressure relief mechanism (30), a projection of the second insulating portion (413) is located within a projection of the pressure relief portion (31).

12. The battery cell (6) according to claim 11, wherein the shell (20) comprises a first wall (211), and the pressure relief mechanism (30) is disposed on the first wall (211);
the battery cell (6) further comprises a support plate (60), the support plate (60) is located between the first wall (211) and the first insulating plate (41); the support plate (60) comprises a first support portion (61), a second support portion (62) and a third weak portion (63), wherein the third weak portion (63) connects the first support portion (62) and the second support portion (63); and
in the thickness direction (X), a projection of the second support portion (62) is located within the projection of the pressure relief portion (31).

13. A battery (2) comprising a plurality of battery cells (6) according to any of claims 1 to 12.

14. An electricity consuming device comprising a battery cell (6) according to any of claims 1 to 12, wherein the battery cell (6) is adapted to provide electrical energy.

## Patentansprüche

1. Batteriezelle (6), umfassend:
eine Hülle (20);
einen Druckentlastungsmechanismus (30), der an der Hülle (20) angeordnet ist;
eine Elektrodenanordnung (10), die innerhalb der Hülle (20) aufgenommen ist; und
ein Isolationselement (40), das in der Hülle (20) aufgenommen ist, wobei sich mindestens ein Teil des Isolationselements (40) zwischen dem Druckentlastungsmechanismus (30) und der Elektrodenanordnung (10) befindet und ein Teil des Isolationselements (40), der sich zwischen dem Druckentlastungsmechanismus (30) u^{™}nd der Elektrodenanordnung (10) befindet, mit einem ersten schwachen Abschnitt (411) versehen ist;
wobei das Isolationselement (40) eine erste Isolationsplatte (41) umfasst, die erste Isolationsplatte (41) einen ersten isolierenden Abschnitt (412), einen zweiten isolierenden Abschnitt (413) und mehrere erste schwache Abschnitte (411) umfasst und die mehreren ersten schwachen Abschnitte (411) zwischen dem ersten isolierenden Abschnitt (412) und dem zweiten isolierenden Abschnitt (413) verbunden sind; und
**dadurch gekennzeichnet, dass**
die erste Isolationsplatte (41) mit mehreren zweiten Durchgangslöchern (415) versehen ist und die mehreren zweiten Durchgangslöcher (415) und die mehreren ersten schwachen Abschnitte (411) abwechselnd in einer Umfangsrichtung des zweiten isolierenden Abschnitts (413) auf einer Außenseite des zweiten isolierenden Abschnitts (413) angeordnet sind.

2. Batteriezelle (6) nach Anspruch 1, wobei der Druckentlastungsmechanismus (30) einen zweiten schwachen Abschnitt (32) umfasst.

3. Batteriezelle (6) nach Anspruch 1 oder 2, wobei die Hülle (20) mit einem Druckentlastungsloch (20a) versehen ist und der Druckentlastungsmechanismus (30) an der Hülle (20) installiert ist und das Druckentlastungsloch (20a) bedeckt.

4. Batteriezelle (6) nach Anspruch 3, wobei der erste schwache Abschnitt (411) zumindest teilweise mit dem Druckentlastungsloch (20a) in einer Dickenrichtung (X) des Druckentlastungsmechanismus (30) überlappt.

5. Batteriezelle (6) nach Anspruch 3 oder 4, wobei das Isolationselement (40) eine erste Isolationsplatte (41) umfasst, die erste Isolationsplatte (41) einen ersten isolierenden Abschnitt (412), einen zweiten isolierenden Abschnitt (413) und den ersten schwachen Abschnitt (411) umfasst und der erste schwache Abschnitt (411) den ersten isolierenden Abschnitt (412) und den zweiten isolierenden Abschnitt (413) verbindet; und
sich in der Dickenrichtung (X) des Druckentlastungsmechanismus (30) ein Vorsprung des zweiten isolierenden Abschnitts (413) innerhalb eines Vorsprungs des Druckentlastungslochs (20a) befindet.

6. Batteriezelle (6) nach Anspruch 5, wobei der erste isolierende Abschnitt (412) den zweiten isolierenden Abschnitt (413) auf einer Außenseite des zweiten isolierenden Abschnitts (413) umgebend angeordnet ist und der erste schwache Abschnitt (411) zwischen dem ersten isolierenden Abschnitt (412) und dem zweiten isolierenden Abschnitt (413) angeordnet ist.

7. Batteriezelle (6) nach Anspruch 5 oder 6, wobei der zweite isolierende Abschnitt (413) eine Größe aufweist, die kleiner als die des Druckentlastungslochs (20a) in einer beliebigen Richtung senkrecht zu der Dickenrichtung (X) ist.

8. Batteriezelle (6) nach einem der Ansprüche 5 bis 7, wobei sich in der Dickenrichtung (X) ein Vorsprung des ersten schwachen Abschnitts (411) innerhalb des Vorsprungs des Druckentlastungslochs (20a) befindet.

9. Batteriezelle (6) nach einem der Ansprüche 5 bis 8, wobei die Hülle (20) eine erste Wand (211) umfasst, das Druckentlastungsloch (20a) an der ersten Wand (211) angeordnet ist, der Druckentlastungsmechanismus (30) mit der ersten Wand (211) verbunden ist und mindestens ein Teil des ersten isolierenden Abschnitts (412) die erste Wand (211) isoliert und von der Elektrodenanordnung (10) isoliert.

10. Batteriezelle (6) nach einem der Ansprüche 1 bis 9, wobei die Hülle (20) eine erste Wand (211) umfasst und der Druckentlastungsmechanismus (30) an der ersten Wand (211) installiert ist; wobei die erste Wand (211) eine Innenfläche (211a), die der Elektrodenanordnung (10) zugewandt ist, und eine Außenfläche (211b), die von der Elektrodenanordnung (10) abgewandt ist, umfasst und wobei die Innenfläche (211a) näher an der Elektrodenanordnung (10) ist als der Druckentlastungsmechanismus (30).

11. Batteriezelle (6) nach Anspruch 1, wobei der Druckentlastungsmechanismus (30) einen Druckentlastungsabschnitt (31) und einen zweiten schwachen Abschnitt (32) umfasst, der den Druckentlastungsabschnitt (31) auf einer Außenseite des Druckentlastungsabschnitts (31) umgibt; wobei das Isolationselement (40) eine erste Isolationsplatte (41) umfasst, die erste Isolationsplatte (41) einen ersten isolierenden Abschnitt (412), einen zweiten isolierenden Abschnitt (413) und den ersten schwachen Teil (411) umfasst und der erste schwache Teil (411) den ersten isolierenden Abschnitt (412) und den zweiten isolierenden Abschnitt (413) verbindet; und
wobei sich in der Dickenrichtung (X) des Druckentlastungsmechanismus (30) ein Vorsprung des zweiten isolierenden Abschnitts (413) innerhalb eines Vorsprungs des Druckentlastungsabschnitts (31) befindet.

12. Batteriezelle (6) nach Anspruch 11, wobei die Hülle (20) eine erste Wand (211) umfasst und der Druckentlastungsmechanismus (30) an der ersten Wand (211) angeordnet ist;
wobei die Batteriezelle (6) ferner eine Stützplatte (60) umfasst, sich die Stützplatte (60) zwischen der ersten Wand (211) und der ersten Isolierplatte (41) befindet; die Stützplatte (60) einen ersten Stützabschnitt (61), einen zweiten Stützabschnitt (62) und einen dritten schwachen Abschnitt (63) umfasst, wobei der dritte schwache Abschnitt (63) den ersten Stützabschnitt (62) und den zweiten Stützabschnitt (63) verbindet; und
wobei sich in der Dickenrichtung (X) ein Vorsprung des zweiten Stützabschnitts (62) innerhalb des Vorsprungs des Druckentlastungsabschnitts (31) befindet.

13. Batterie (2), umfassend mehrere Batteriezellen (6) nach einem der Ansprüche 1 bis 12.

14. Elektrizität verbrauchende Vorrichtung, umfassend eine Batteriezelle (6) nach einem der Ansprüche 1 bis 12, wobei die Batteriezelle (6) dazu angepasst ist, elektrische Energie bereitzustellen.

## Revendications

1. Élément de batterie (6), comprenant :
une coque (20) ;
un mécanisme de décompression (30) disposé sur la coque (20) ;
un ensemble électrode (10) logé à l'intérieur de la coque (20) ; et
un organe isolant (40) logé à l'intérieur de la coque (20), dans lequel au moins une partie de l'organe isolant (40) est située entre le mécanisme de décompression (30) et l'ensemble électrode (10), et une partie de l'organe isolant (40) située entre le mécanisme de décompression (30) et l'ensemble électrode (10) est pourvue d'une première partie faible (411) ;
dans lequel l'organe isolant (40) comprend une première plaque isolante (41), la première plaque isolante (41) comprend une première partie isolante (412), une deuxième partie isolante (413) et une pluralité de premières parties faibles (411), et la pluralité des premières parties faibles (411) sont connectées entre la première partie isolante (412) et la deuxième partie isolante (413) ; et
**caractérisé en ce que**
la première plaque isolante (41) est pourvue d'une pluralité de deuxièmes trous traversants (415), et la pluralité de deuxièmes trous traversants (415) et la pluralité de premières parties faibles (411) sont agencées de manière alternée dans une direction périphérique de la deuxième partie isolante (413) sur un côté externe de la deuxième partie isolante (413).

2. Élément de batterie (6) selon la revendication 1, dans lequel le mécanisme de décompression (30) comprend une deuxième partie faible (32).

3. Élément de batterie (6) selon la revendication 1 ou la revendication 2, dans lequel la coque (20) est pourvue d'un trou de décompression (20a), et le mécanisme de décompression (30) est installé sur la coque (20) et couvre le trou de décompression (20a).

4. Élément de batterie (6) selon la revendication 3, dans lequel la première partie faible (411) chevauche au moins partiellement le trou de décompression (20a) dans une direction d'épaisseur (X) du mécanisme de décompression (30).

5. Élément de batterie (6) selon la revendication 3 ou la revendication 4, dans lequel l'organe isolant (40) comprend une première plaque isolante (41), la première plaque isolante (41) comprend une première partie isolante (412), une deuxième partie isolante (413) et la première partie faible (411), et la première partie faible (411) connecte la première partie isolante (412) et la deuxième partie isolante (413) ; et
dans la direction d'épaisseur (X) du mécanisme de décompression (30), une saillie de la deuxième partie isolante (413) est située à l'intérieur d'une saillie du trou de décompression (20a).

6. Élément de batterie (6) selon la revendication 5, dans lequel la première partie isolante (412) est disposée autour de la deuxième partie isolante (413) sur un côté externe de la deuxième partie isolante (413), et la première partie faible (411) est située entre la première partie isolante (412) et la deuxième partie isolante (413).

7. Élément de batterie (6) selon la revendication 5 ou la revendication 6, dans lequel la deuxième partie isolante (413) a une taille inférieure à celle du trou de décompression (20a) dans n'importe quelle direction perpendiculaire à la direction d'épaisseur (X).

8. Élément de batterie (6) selon l'une quelconque des revendications 5 à 7, dans lequel dans la direction d'épaisseur (X), une saillie de la première partie faible (411) est située à l'intérieur de la saillie du trou de décompression (20a).

9. Élément de batterie (6) selon l'une quelconque des revendications 5 à 8, dans lequel la coque (20) comprend une première paroi (211), le trou de décompression (20a) est disposé sur la première paroi (211), le mécanisme de décompression (30) est connecté à la première paroi (211), et au moins une partie de la première partie isolante (412) isole, et agit comme isolant pour, la première paroi (211) par rapport à l'ensemble électrode (10).

10. Élément de batterie (6) selon l'une quelconque des revendications 1 à 9, dans lequel la coque (20) comprend une première paroi (211), et le mécanisme de décompression (30) est installé sur la première paroi (211) ;
la première paroi (211) comprend une surface interne (211a) faisant face à l'ensemble électrode (10) et une surface externe (211b) faisant face à l'écart de l'ensemble électrode (10), et la surface interne (211a) est plus proche de l'ensemble électrode (10) que le mécanisme de décompression (30).

11. Élément de batterie (6) selon la revendication 1, dans lequel le mécanisme de décompression (30) comprend une partie de décompression (31) et une deuxième partie faible (32) disposée autour de la partie de décompression (31) sur un côté externe de la partie de décompression (31) ;
l'organe isolant (40) comprend une première plaque isolante (41), la première plaque isolante (41) comprend une première partie isolante (412), une deuxième partie isolante (413) et la première partie faible (411), et la première partie faible (411) connecte la première partie isolante (412) et la deuxième partie isolante (413) ; et
dans la direction d'épaisseur (X) du mécanisme de décompression (30), une saillie de la deuxième partie isolante (413) est située à l'intérieur d'une saillie de la partie de décompression (31).

12. Élément de batterie (6) selon la revendication 11, dans lequel la coque (20) comprend une première paroi (211), et le mécanisme de décompression (30) est disposé sur la première paroi (211) ;
l'élément de batterie (6) comprend en outre une plaque de support (60), la plaque de support (60) est située entre la première paroi (211) et la première plaque isolante (41) ; la plaque de support (60) comprend une première partie de support (61), une deuxième partie de support (62) et une troisième partie faible (63), la troisième partie faible (63) connectant la première partie de support (62) et la deuxième partie de support (63) ; et
dans la direction d'épaisseur (X), une saillie de la deuxième partie de support (62) est située à l'intérieur de la saillie de la partie de décompression (31).

13. Batterie (2) comprenant une pluralité d'éléments de batterie (6) selon l'une quelconque des revendications 1 à 12.

14. Dispositif consommateur d'électricité comprenant un élément de batterie (6) selon l'une quelconque des revendications 1 à 12, l'élément de batterie (6) étant conçu pour fournir de l'énergie électrique.
